Europäisches Patentamt

European Patent Office

Office européen des brevets

(11) Veröffentlichungsnummer: **0 234 585 B1**

(12) **EUROPÄISCHE PATENTSCHRIFT**

(45) Veröffentlichungstag der Patentschrift: **18.09.91**

(51) Int. Cl.⁵: **A01D 41/14**, A01D 75/28

(21) Anmeldenummer: **87102765.2**

(22) Anmeldetag: **26.02.87**

(54) **Mähdrescher.**

(30) Priorität: **27.02.86 US 833932**

(43) Veröffentlichungstag der Anmeldung:
**02.09.87 Patentblatt 87/36**

(45) Bekanntmachung des Hinweises auf die
Patenterteilung:
**18.09.91 Patentblatt 91/38**

(84) Benannte Vertragsstaaten:
**BE DE ES FR GB IT**

(56) Entgegenhaltungen:
EP-A- 0 048 127       EP-A- 0 198 544
US-A- 2 947 134       US-A- 4 253 295
US-A- 4 266 395       US-A- 4 612 757

(73) Patentinhaber: **DEERE & COMPANY**
**1 John Deere Road**
**Moline, Illinois 61265(US)**

(72) Erfinder: **DePauw, Richard Arthur**
**18 Deer Run**
**Moline Illinois 61265(US)**
Erfinder: **Spangler, Robert Patrick**
**906-5th Street A**
**Hampton Illinois 61256(US)**
Erfinder: **Brown, William Robert**
**892 Buttercup Rd.**
**Carlsbad California 92008(US)**
Erfinder: **Hengen, Edward John**
**16948 Madison Road**
**South Bend, Indiana 46614(US)**

(74) Vertreter: **Feldmann, Bernhard et al**
**DEERE & COMPANY European Office, Patent**
**Department Steubenstrasse 36-42 Postfach**
**503**
**W-6800 Mannheim 1(DE)**

EP 0 234 585 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 234 585 B1

**Beschreibung**

Die Erfindung bezieht sich auf einen Mähdrescher mit einer über zwei Hydraulikzylinder an ein Schrägfördergehäuse höhenverstellbar angeordneten und an ihrer Unterseite mit zahlreichen nebeneinander liegenden Bodenkontaktelementen versehenen Erntebergungsvorrichtung, wobei die Bodenkontaktelemente die Bodenoberfläche über die gesamte Breite des Erntebergungsvorrichtung abtasten und mindestens eine Sensorschaltereinrichtung eines elektrohydraulischen Systems betätigen, über das die Hydraulikzylinder in einem die Erntebergungsvorrichtung automatisch in vorgegebenen Grenzen anhebenden und absenkenden Sinne betätigbar sind.

Bei diesem bekannten Mähdrescher (EP-A1-0 048 127) wird die Erntebergungsvorrichtung durch manuelle Betätigung der Hydraulikzylinder in eine vorgewählte Arbeitsstellung abgesenkt, wonach die automatische Höheneinstellung das Halten der Erntebergungsvorrichtung auf dem vorgewählten Bodenabstand übernimmt, wobei allerdings nur immer eine Parallelverstellung möglich ist.

Andererseits zeigt die nur in den benannten Vertragsstaaten DE, FR und GB hinsichtlich der Neuheit zu berücksichtigende EP-A1-0 198 544 eine gattungsgleiche Vorrichtung, bei der die Erntebergungsvorrichtung auch über ein elektrohydraulisches System um eine in Fahrtrichtung liegende Achse automatisch verschwenkt werden kann. Hierzu sind lediglich an den äußeren Seiten der Erntebergungsvorrichtung Bodenkontaktelemente vorgesehen.

Auch ist es nicht mehr neu (US-A-4 487 004), bei einem Mähdrescher mit überbreiter Schneidwerksplattform letztere dreiteilig auszubilden, wobei ein mittlerer Teil mit dem Schrägfördergehäuse verbunden ist und zwei seitliche Teile über Gelenke an den mittleren Teil angeschlossen sind. Über an den einzelnen Teilen angebrachte Bodenkontaktelemente können unterschiedliche Höhenlagen automatisch eingestellt werden, wobei die beiden äußeren Teile gegenüber dem mittleren Teil eine Schieflage einnehmen können. Hierzu müssen auch die an der Schneidwerksplattform vorgesehenen Aggregate, wie Schneidwerk, Haspel und Querförderschnekke, geteilt ausgebildet sein, wodurch eine einwandfreie Wirkung der Schneidwerksplattform beeinträchtigt wird.

Demgegenüber liegt der Erfindung die Aufgabe zugrunde, das Schrägfördergehäuse bzw. die Schneidwerksplattform derart auszubilden und anzuordnen, daß mit einem Minimum an baulichem Aufwand eine schnelle Anpassung der Schneidwerksplattform an die Bodenoberfläche möglich ist, ohne daß dabei die Förderwirkung insbesondere an der Übergangsstelle zwischen Schneidwerksplattform und Schrägfördergehäuse beeinträchtigt wird.

Diese Aufgabe ist durch die Merkmale des Hauptanspruches gelöst.

Durch die zahlreichen an der Schneidwerksplattform angeordneten Bodenkontaktelemente läßt sich die Bodenoberfläche über die gesamte Breite der Schneidwerksplattform optimal abtasten und somit je nach Bodenbeschaffenheit eine Höhenverstellung der Schneidwerksplattform vornehmen. Gleichzeitig ist es auch möglich, eine Verschwenkung der Schneidwerksplattform um die in Fahrtrichtung verlaufende Achse vornehmen zu können, so daß auch bei seitlich abfallender Bodenoberfläche eine optimale Anpassung der Schneidwerksplattform an den Boden vorgenommen werden kann. Die einzelnen Bodenkontaktelemente sind dabei jeweils einem bestimmten Teil der Schneidwerksplattform zugeordnet. Die von den Bodenkontaktelementen ausgehenden Steuerimpulse für Anheben oder Absenken bzw. Querneigung der Schneidwerksplattform werden in dem elektrischen Steuersystem bzw. Logikkreislauf oder in einem Rechner entsprechend ausgewertet und umgewandelt, so daß dann die entsprechenden Steuerventile aktiviert werden, um somit eine wahlweise Druckmittelversorgung der Hydraulikzylinder vornehmen zu können. In vorteilhafter Weise stehen die einzelnen Bodenkontaktelemente mit entsprechenden Sensorschaltereinrichtungen in Wirkverbindung, die jeweils für die entsprechenden Teilabschnitte der Schneidwerksplattform zuständig sind. Die an der Schneidwerksplattform angeordneten Bodenkontaktelemente schwenken hierzu um einzelne quer zur Fahrtrichtung verlaufende Achsen und betätigen dann die Sensorschaltereinrichtungen, die zahlreiche in Gruppen angeordnete Sensorschaltkontakte aufweisen, die über elektrische Leitungen mit einer elektrischen Stellvorrichtung zur Beeinflussung von Steuerschiebern in Verbindung stehen und diese je nach Schalterstellungen in eine Durchflußstellung, eine Sperrstellung bzw. in eine Abflußstellung verschieben, so daß dann der zugehörige Hydraulikzylinder mit Druckmittel versorgt werden kann. Die einzelnen Sensorschaltkontakte sind dabei so ausgerüstet, daß entweder die obere Gruppe der Sensorschaltkontakte dem Steuerventil für die Hydraulikzylinder zum Anheben bzw. Absenken des Schrägfördergehäuses zugeordnet sind, während eine zweite Gruppe Sensorschaltkontaktelemente über eine elektrische Leitung mit einem weiteren Steuerventil zur Verstellung der Querneigung der Schneidwerksplattform verbunden ist. Ferner ist das elektrohydraulische Steuersystem derart ausgebildet, daß es aufgrund der Steuerimpulse der einzelnen Sensorschaltkontakte anspricht, um beispielsweise lediglich die Hydraulikzylinder für die Höhenverstellung des Schrägfördergehäuses zu aktivieren, ohne daß dabei eine Seitenverstel-

2

EP 0 234 585 B1

lung der Schneidwerksplattform um die in Fahrtrichtung verlaufende Achse erfolgt, insbesondere dann, wenn ein seitlicher Abfall der Bodenoberfläche nicht auftritt.

In vorteilhafter Weise ist die Schneidwerksplattform im unteren Bereich über eine sich in Fahrtrichtung erstreckende Gelenkachse mit dem Schrägfördergehäuse verbunden, so daß bei einer Seitenverstellung der Schneidwerksplattform diese lediglich um die untere Gelenkachse seitlich kippt. Dabei verstellt sich auch der Boden der Schneidwerksplattform gegenüber dem Boden des Schrägfördergehäuses. Um eine Verengung des Durchlaßquerschnittes zwischen der Schneidwerksplattform und dem Schrägfördergehäuse auszugleichen, ist im vorderen Bereich des Schrägfördergehäuses der Boden dachförmig ausgebildet, so daß bei einer Querneigung der Schneidwerksplattform der Boden der Schneidwerksplattform auch an den Boden des Schrägfördergehäuses angepaßt werden kann. Zweckmäßig wird die Schneidwerksplattform gegenüber dem Schrägfördergehäuse nur in einem kleinen Stellbereich verschwenkt. Eine weitere Verschwenkung der Schneidwerksplattform um die in Fahrtrichtung verlaufende Achse führt zu einer Verdrehung des Schrägfördergehäuses ebenfalls um die in Fahrtrichtung verlaufende Längsachse. Somit kann der Stellbereich der Schneidwerksplattform wesentlich vergrößert werden. Bei einer derartigen Verstellung der Schneidwerksplattform werden zwei Hydraulikzylinder für die Höhenverstellung und ein Hydraulikzylinder für die Querneigung der Schneidwerksplattform benötigt. Es ist jedoch auch möglich, anstelle der drei Hydraulikzylinder lediglich mit zwei Hydraulikzylindern auszukommen, wobei diese über die Sensorschaltereinrichtungen so gesteuert werden, daß sie entweder lediglich zur Höhenverstellung der Schneidwerksplattform oder auch gleichzeitig zur Verstellung der Querneigung der Schneidwerksplattform eingesetzt werden. Im letzteren Fall wird keine Verschwenkung der Schneidwerksplattform gegenüber dem Schrägfördergehäuse vorgenommen, sondern die Einstellung der Querneigung der Schneidwerksplattform erfolgt durch Verdrehen des Schrägfördergehäuses um seine Längsachse. Erfolgt die Einstellung der Querneigung der Schneidwerksplattform über lediglich zwei Hydraulikzylinder, die normalerweise zur Höhenverstellung der Schneidwerksplattform eingesetzt werden, so werden diese wechselweise mit Druckmittel versorgt und über die zugehörigen Sensorschaltereinrichtungen aktiviert. In der Endlagestellung der Hydraulikzylinder kann Druckmittel über ein Überdruckventil abfließen, das hierzu zwischen den Versorgungsleitungen der beiden parallel zueinander angeordneten Hydraulikzylinder vorgesehen ist. Die hierzu notwendigen Sensorschaltereinrichtungen zur Aktivierung der Hydraulikzylinder sind in vorteilhafter Weise mit zwei Satz Sensorschaltkontakten ausgestattet, wobei der eine Satz für die Höhensteuerung der Erntebergungsvorrichtung und der andere Satz für die Querneigung der Erntebergungsvorrichtung zur Verfügung steht. Zur Höhensteuerung der Erntebergungsvorrichtung werden lediglich zwei gleiche Schaltimpulse von den beiden Sensorschaltereinrichtungen benötigt, während bei der Verstellung der Querneigung der Erntebergungsvorrichtung unterschiedliche Schaltimpulse von der Sensorschaltereinrichtung erforderlich sind, um beispielsweise den rechten Hydraulikzylinder auszufahren und den anderen festzuhalten bzw. einzufahren. Hierzu ist zwischen den Schaltkontakten und der elektrohydraulischen Stellvorrichtung ein Logikkreislauf bzw. auch ein Rechner geschaltet, der die einzelnen Schaltimpulse entsprechend auswertet und umsetzt bzw. den Kraftfluß zum Hydraulikzylinder zur Verstellung der Querneigung unterbricht, wenn zwei gleiche Schaltimpulse von den beiden Sensorschaltereinrichtungen ausgehen. Treten jedoch unterschiedliche Schaltimpulse auf, so wird dann der Hydraulikzylinder zur Verstellung der Querneigung aktiviert. Bei derartigen Schalt- und Steueranordnungen kann zur Verstellung der Querneigung mit lediglich einem Hydraulikzylinder ausgekommen werden, der normalerweise auch zur Höhenverstellung der Erntebergungsvorrichtung eingesetzt wird. Erfolgt die Verstellung der Querneigung der Erntebergungsvorrichtung lediglich unter Einsatz der Verdrehung des Schrägfördergehäuses, so wird in vorteilhafter Weise der Durchlaßquerschnitt zwischen der Erntebergungsvorrichtung und dem Schrägfördergehäuse nicht verändert, so daß ein einwandfreier Transport des Erntegutes optimal auch bei starker Querneigung der Erntebergungsvorrichtung gewährleistet wird.

Die letzteren und weiteren Merkmale der Erfindung sind Gegenstand der Unteransprüche.

Im folgenden wird die Erfindung anhand von mehrere Ausführungswege darstellenden Zeichnungen näher erläutert. Es zeigt:

Fig. 1    den rechten vorderen Teil eines Mähdreschers mit einer Erntebergungsvorrichtung in Seitenansicht,

Fig. 2    einen Querschnitt des Schrägfördergehäuses des Mähdreschers entlang der Linie 2 - 2 gemäß Fig. 3,

Fig. 3    eine Teilansicht des Schrägfördergehäuses mit einem Teil der Schneidwerksplattform in gestrichelten Linien,

Fig. 4    das Mähwerk, das am vorderen Ende der Schneidwerksplattform angeordnet ist, in verschiedenen Stellungen,

Fig. 5    das rechte Ende der Sensorwelle in der Ansicht 5 - 5 gemäß Fig. 4,

Fig. 6    eine vereinfachte Darstellung der Rückansicht der Schneidwerksplattform, die der Bodenkon-

3

tur folgt,

Fig. 7    einen Querschnitt entlang der Linie 7 - 7 gemäß Fig. 5,

Fig. 8    eine Schaltervorrichtung der Sensoreinrichtung,

Fig. 9    einen elektrischen Stromkreislauf zur automatischen Steuerung der Arbeitshöhe der Schneidwerksplattform,

Fig. 10    Schaltkontakte, die als Kreisbogensegmente ausgebildet sind,

Fig. 11    einen Drehschalter mit den einzelnen kreisbogenförmig angeordneten Schaltzonen,

Fig. 12    eine Steuervorrichtung zur automatischen Seitenneigung und Höhensteuerung der Schneidwerksplattform gemäß Fig. 1 bis 3,

Fig. 13    eine ähnliche Vorrichtung wie in Fig. 12 für ein weiteres Ausführungsbeispiel gemäß Fig. 14 und 15,

Fig. 14    eine rechte Seitenansicht des Schrägfördergehäuses mit verschiedenen Anschlußmöglichkeiten für den Hydraulikzylinder eines weiteren Ausführungsbeispieles,

Fig. 15    eine perspektivische Darstellung eines Schrägfördergehäuses eines weiteren Ausführungsbeispieles, wobei die Hydraulikzylinder verschieden gesteuert werden, um ein Kippen des Schrägfördergehäuses um die Längsachse des Schrägfördergehäuses zu ermöglichen,

Fig. 16    eine schematische Darstellung eines Stromkreislaufes eines weiteren Ausführungsbeispieles gemäß Fig. 1 bis 3.

In der Zeichnung ist mit 10 ein Mähdrescher bezeichnet, der zwei in der Zeichnung nicht dargestellte steuerbare Laufräder und zwei antreibbare Laufräder 12 aufweist, die unterhalb einer Fahrerkabine 14 liegen. An das vordere Ende des Mähdreschers 10 ist eine Erntebergungsvorrichtung 16 angeschlossen.

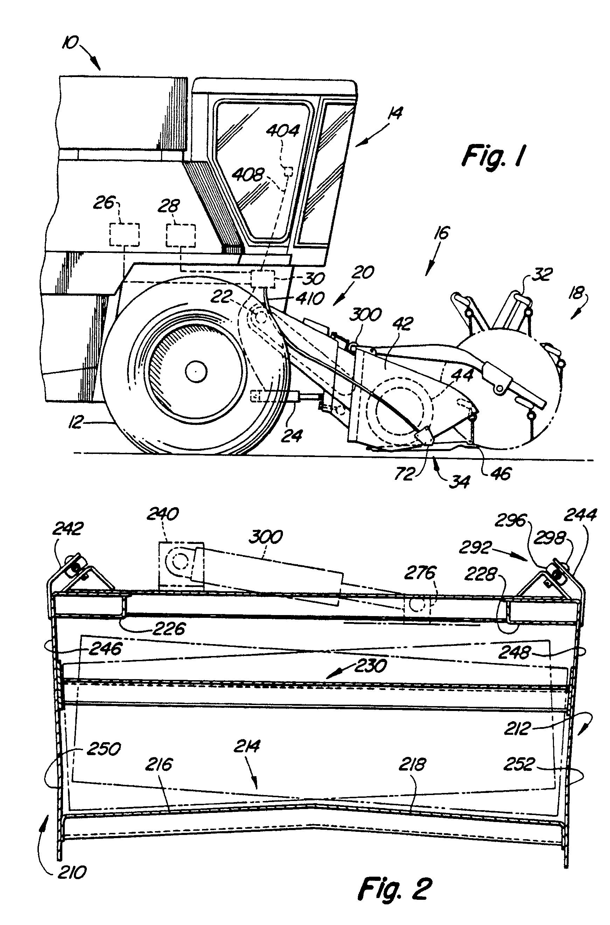

Am vorderen Ende der Erntebergungsvorrichtung 16 befindet sich eine Schneidwerksplattform 18, die mittig an einem Schrägfördergehäuse 20 angeschlossen ist, das wiederum über eine Achse 22 mit dem vorderen Ende des Mähdreschers vertikal schwenkbar verbunden ist. Die Vertikalverstellung der Erntebergungsvorrichtung 16 erfolgt über zwei nebeneinander angeordnete, einfach wirkende Hydraulikzylinder 24, die mit einem hydraulischen Kreislauf 26 und einem elektrischen Stromkreislauf 28 wirkungsmäßig verbunden sind, die alle im Mähdrescher 10 angeordnet sind, wie aus Fig. 1 hervorgeht. Die Steuereinrichtung, die auch für die Seitenneigung der Schneidwerksplattform 18 zuständig ist, wird nachfolgend beschrieben.

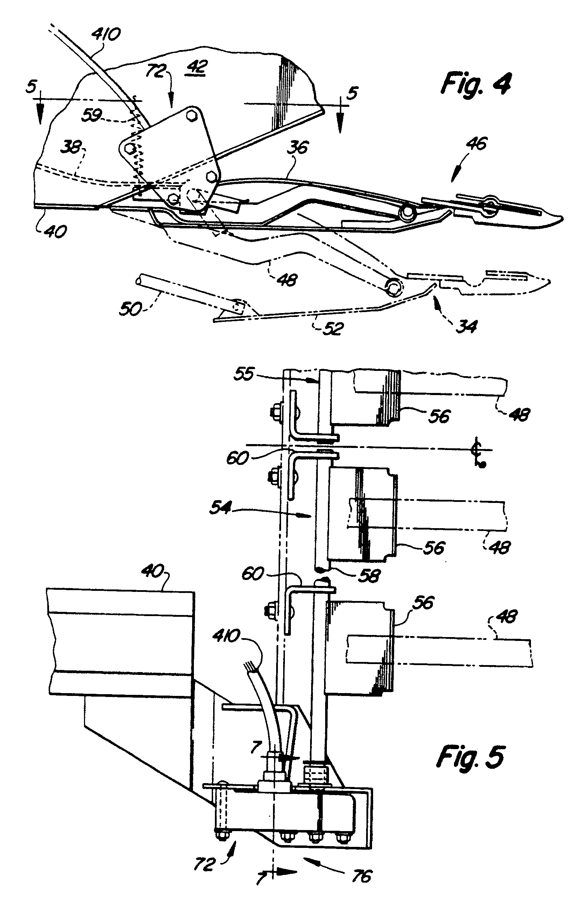

Die Schneidwerksplattform 18 ist insbesondere in den Figuren 1, 4 und 5 im Detail veranschaulicht. Die Höhenlage bzw. die Querneigung der Schneidwerksplattform 18 wird mittels der erfindungsgemäßen Steuervorrichtung bestimmt. Eine einstellbare bzw. verstellbare Haspel 32 unterstützt den Einzug des stehenden Erntegutes in Richtung eines flexibel ausgebildeten Schneidwerkes 34, wenn der Mähdrescher über das Feld fährt. Das abgetrennte Erntegut wandert über eine Überbrückungsplatte 36 zu einem flexiblen Bodenteil 38. Die einzelnen Teile der Schneidwerksplattform 18 sind, wie aus Fig. 4 und 5 hervorgeht, in einem Rahmen 40 aufgenommen. Gegenüberliegende mit Abstand zueinander angeordnete Seitenteile 42 dienen zur Aufnahme einer Einzugsschnecke 44, die das Erntegut zur Mitte zusammenzieht und es dem Schrägfördergehäuse 20 zuführt, so daß es dem Arbeitsprozeß zugeleitet werden kann.

Die besondere Ausbildung und Funktion des flexiblen Schneidwerkes 34 ist im Detail in der US-A-3 982 383 beschrieben und dargestellt. Das Erntegut wird mittels eines Mähwerkbalkens 46 abgetrennt, der schwimmend gelagert und gegenüber dem Bodenteil 38 mittels oberer Lenker 48 (Stoplenker) und unterer Lenker 50 (Stoßlenker) an der Schneidwerksplattform 18 vertikal verstellbar angeordnet ist. Zahlreiche nebeneinander angeordnete Bodenberührungselemente bzw. Kufen dienen als Fühler oder Bodenkontaktelemente 52 und ferner als Geberelement zur Bestimmung der Einstellhöhe des entsprechenden Teiles des Mähwerkbalkens 46 mit Bezug auf den Boden und gegenüber dem Bodenteil 38 des Mähdreschers 10.

Zwei gegenüberliegende rechte und linke Sensorwelleneinrichtungen 54 und 55 überspannen die gesamte Breite der Schneidwerksplattform 18, wobei die innenliegenden Enden der Sensorwelleneinrichtungen sich bis zur Mittellinie der Schneidwerksplattform 18 erstrecken. Die Sensorwelleneinrichtungen 54 und 55 sind im Detail in den Figuren 4 und 5 veranschaulicht. Die Sensorwelleneinrichtungen 54 und 55 sind drehbare Sensorelemente, und ihre Verdrehwinkel mit Bezug auf den feststehenden Rahmen 40 der Schneidwerksplattform 18 geben den vertikalen Versatz des Mähwerksbalkens 46 mit Bezug auf den Bodenteil 38 an. Die rechte und linke Sensorwelleneinrichtung 54 und 55 sind spiegelbildlich ausgebildet, so daß nachfolgend nur eine davon im Detail erläutert ist.

Die rechte Sensorwelleneinrichtung 54 weist zahlreiche mit Abstand zueinander angeordnete Anschlußelemente 56 auf, die starr mit einer Welle 58 verbunden sind, die in Halterungen 60 drehbar gelagert ist, die wiederum mit dem Rahmen 40 fest verbunden sind. Die Sensorwelleneinrichtung 54 ist mittels einer Zugfeder 59 vorgespannt, so daß die Anschlußelemente 56, die auch als Sensorplatten dienen, gegen die oberen Lenker 48 anliegen. Da die Anschlußelemente bzw. Sensorplatten 56 fest mit der Welle 58 verbunden sind, wird die Wellenstellung und somit das hieraus resultierende Signal durch den am weitesten

4

nach oben verschwenkten oberen Lenker 48 festgelegt, und zwar in Abhängigkeit von der Berührung einer oder mehrerer Kufen mit der Bodenkontur des Feldes, die im Ansprechfall höher liegen als die übrigen Kufen.

Die Sensorwelleneinrichtungen 54 und 55 sind wirkungsmäßig mit je einer Sensorschaltereinrichtung 72 verbunden, die drehbar auf den äußeren Enden der Sensorwelleneinrichtung 54 bzw. 55 angeordnet sind. Jede Sensorschaltereinrichtung 72 ist mit Bezug auf den Rahmen 40 gegen Drehen gesichert, wobei die Drehsicherung über ihr Gehäuse 74 und eine Halterung 76 erfolgt, die mit dem Rahmen 40 fest verbunden ist. Die Sensorschaltereinrichtung 72 ist in der US-A-4 332 126 im Detail beschrieben.

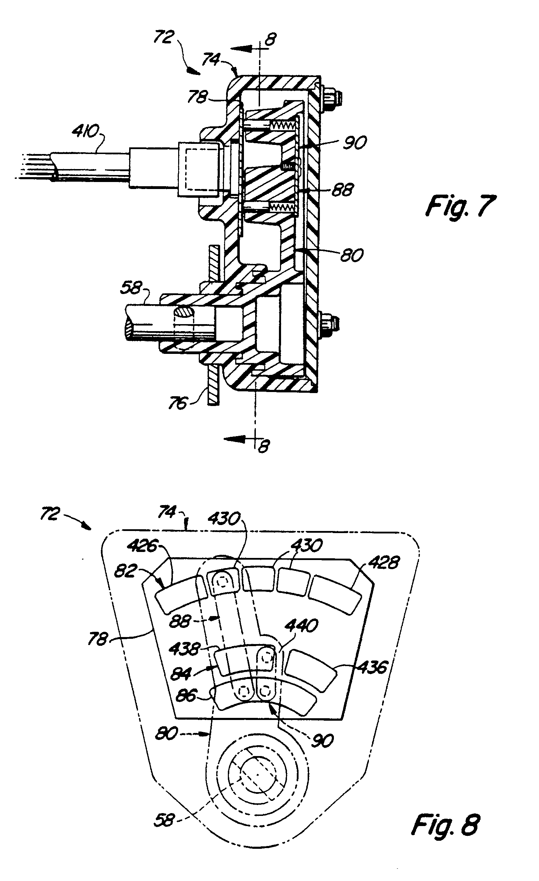

An der Innenseite des Gehäuses 74 (siehe Fig. 7 und 8) ist eine Leiterplatte 78 angeordnet, der eine Drehschaltereinrichtung 80 zugeordnet ist, die koaxial auf der Welle 58 angeordnet ist und von ihr angetrieben wird. Die Leiterplatte 78 weist zwei konzentrisch angeordnete Reihen ebener Ausgangsschaltkontakte 82 und 84 und einen einzelnen Eingangsschaltkontakt 86 auf. Die Eingangs- und Ausgangsschaltkontakte sind mit Bürsten 88 und 90 verbindbar, die auf der Drehschaltereinrichtung 80 angeordnet sind. In vorteilhafter Weise ist das Gehäuse 74 in Richtung der Halterung 76 mit einer Schlitzöffnung versehen, so daß eine drehbare Einstellung des Gehäuses möglich ist. Die Verstellung kann beispielsweise notwendig sein, um Fertigungstoleranzen auszugleichen.

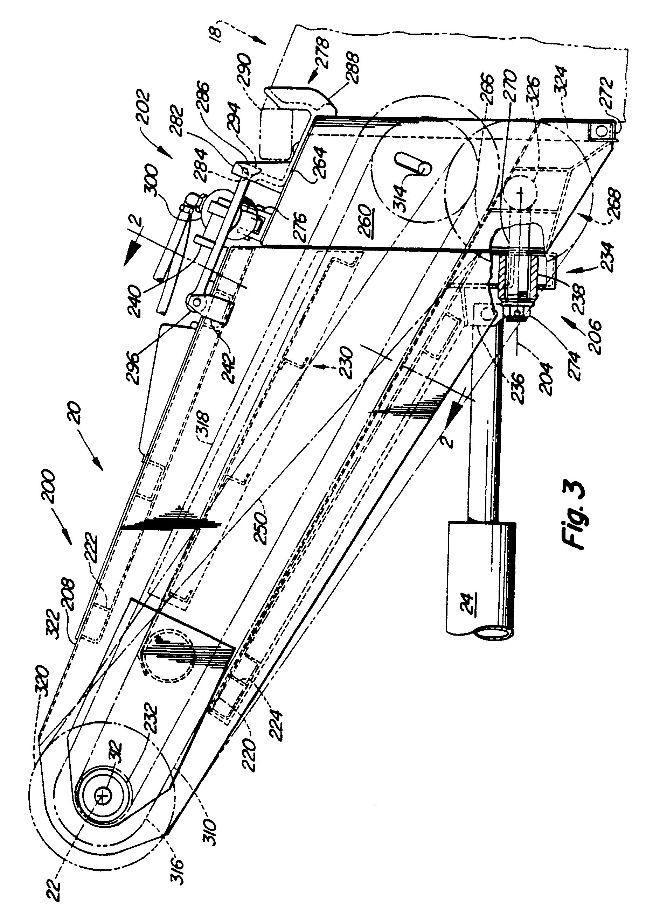

Einzelne Teile des Schrägfördergehäuses 20 sind in den Figuren 2 und 3 veranschaulicht. Das Schrägfördergehäuse 20 besteht aus einem oberen Teil 200 und einem unteren vorderen Teil 202. Die beiden Teile 200 und 202 sind so ausgebildet, daß der vordere bzw. untere Teil 202 gegenüber dem oberen Teil 200 um eine Längsachse 204 aus der Null-Lage um einen Winkel von ca. 3° verdreht werden kann. Hierzu weist der vordere Teil 202 eine Gelenkachse 206 auf, die koaxial zur Längsachse 204 verläuft.

Eine obere Wand 208, zwei gegenüberliegende Seitenwände 210 und 212 sowie ein Boden 214 bilden einen rechteckförmigen Kasten für den oberen Teil 200 des Schrägfördergehäuses 20. Wie aus Fig. 2 hervorgeht, ist der Boden 214 dachförmig ausgebildet und besteht aus einem linken und rechten Bodenteil 216 und 218, die beispielsweise einen nach unten offenen Winkel von ca. 170° bis 175° einschließen können. Die beiden dachförmig zueinander ausgerichteten Bodenteile gehen allmählich in einen flachen Teil über, wobei die Übergangsstelle in den flachen Teil durch die Stelle 220 in Fig. 3 gekennzeichnet ist, die im oberen Bereich des Schrägfördergehäuses 20 liegt. Somit ist sichergestellt, daß an der Übergangsstelle zur Einlaßöffnung des Mähdreschergehäuses der Boden 214 flach ausgebildet ist.

Die obere Wand 208 und der Boden 214 sind durch Verstärkungselemente, beispielsweise Träger 222 und 224, die quer zur Längsachse des Schrägfördergehäuses verlaufen, und durch sich in Längsrichtung erstreckende Träger 226 und 228 verstärkt (siehe Fig. 2). Ein Gleit- bzw. Stützelement 230 für den rücklaufenden Teil des im Schrägfördergehäuse 20 angeordneten Förderbandes ist im oberen Teil des Schrägfördergehäuses vorgesehen und erstreckt sich in etwa über die gesamte Länge des Schrägfördergehäuses. Der obere Teil 200 des Schrägfördergehäuses 20 ist mittels gegenüberliegender Gelenkbolzen 232, die an den Seitenwänden 210 und 212 vorgesehen sind, an den Mähdrescher 10 schwenkbar angeschlossen.

Wie aus Fig. 3 hervorgeht, ist an der Unterseite des Bodens 214 ein quer verlaufender Träger 234 zur Aufnahme von Halterungen 236 vorgesehen, an die die Hydraulikzylinder 24 gelenkig angeschlossen sind. In dem Träger 234 befindet sich auch eine sich koaxial zur längsachse 204 erstreckende Buchse 238. Auf dem linken Teil der oberen Wand 208 befindet sich eine Halterung 240 zum Anschluß eines Hydraulikzylinders 300, der zur Verstellung der Querneigung des unteren Teils 202 des Schrägfördergehäuses 20 dient. Im Bereich der Seitenwände 210 und 212 ist je eine Halterung 242 bzw. 244 angeordnet, die aus mit Bezug auf die obere Wand geneigt verlaufenden und mit Abstand zueinander angeordneten Platten gebildet sind, zwischen denen eine Öse 296 eines Gestänges 292 gelenkig angeschlossen ist.

Die oberen vorderen Teile 246, 248 der Seitenwände 210 und 212 sind mit Bezug auf die Vertikalebene nach außen herausgebogen, so daß die Seitenwände 210 und 212 an einer gebogenen Linie 250, 252 verlaufen. Dabei verläuft der untere Teil der Seitenwände 210, 212 in etwa rechtwinklig zum Boden 214.

Der vordere bzw. untere Teil 202 des Schrägfördergehäuses 20 besteht aus einem in etwa rechteckförmigen Rahmen, der gleichzeitig auch die Einlaßöffnung des Schrägfördergehäuses darstellt. Rechte und linke Seitenwände 260, des vorderen Teils 202 verlaufen rechtwinklig zu einer oberen geneigt verlaufenden Wand 264 und einem Boden 266 des vorderen Teils 202. Der Boden 266 des vorderen Teils 202 bildet den cberteil eines sehr stabilen, quer verlaufenden unteren Rahmens 268, der zur Aufnahme eines horizontal verlaufenden, sich in Längsrichtung erstreckenden Gelenkbolzens 270, der in der Buchse 238 aufgenommen ist, und zum Anschluß von zwei horizontal verlaufenden, mit Abstand zueinander angeordneten Laschen 272 dient (siehe Fig. 3). Der horizontal verlaufende Gelenkbolzen 270 ist frei drehbar in der Buchse 238 aufgenommen und mittels Sicherungsringen 274 gesichert, die hierzu in Nuten des Gelenkbolzens 270 aufgenommen sind. Wie aus Fig. 2 hervorgeht, ist seitlich der Halterung 240 eine weitere Halterung 276 mit Abstand auf der oberen Wand 264 des unteren Teils 202 des Schrägfördergehäuses 20 angeordnet, die ebenfalls zum Anschluß des Hydraulikzylinders 300 dient. Zwei Aufnahmeelemente 278 sind an dem vorderen oberen Ende des unteren Teils 202 des Schrägfördergehäuses 20 vorgesehen und dienen zum Anschluß von an der Schneidwerksplattform 18 vorgesehenen Anschlußösen 290. Der hintere Schenkel 282 eines jeden Aufnahmeelementes 278 weist eine sich nach vorne erstreckende Bohrung 284 mit einer balligen Vertiefung 286 auf, die konzentrisch zur Bohrung angeordnet ist. Jedes Aufnahmeelement 278 ist mit einem vorderen Hakenteil 288 ausgerüstet und dient, wie aus Fig. 3 hervorgeht, zur Aufnahme der Auschlußöse 290 der Schneidwerksplattform 18. Die Schneidwerksplattform 18 ist an ihrem unteren Ende über die Laschen 272 mit dem vorderen Teil 202 des Schrägfördergehäuses 20 verbindbar.

Das relativ große überhängende Gewicht der Schneidwerksplattform 18 wird ferner durch zwei Gestänge 292 aufgefangen, die einenends mit einem Kugelelement 294, anderenends mit einer Auschlußöse 296 ausgerüstet sind. Das Kugelelement 294 sitzt in der balligen Vertiefung 286, während die Öse 296 mittels eines Gelenkbolzens 298 in der jeweiligen Halterung 242 und 244 aufgenommen ist. Eine Verdrehung des vorderen Teiles 202 des Schrägfördergehäuses 20 mit Bezug auf den oberen Teil 200 des Schrägfördergehäuses erfolgt über den Hydraulikzylinder 300, der, wie bereits erwähnt, einenends an die Halterung 240, anderenends an die Halterung 276 angeschlossen ist (siehe Fig. 2).

Eine Fördervorrichtung 310 ist insbesondere in den Figuren 2 und 3 dargestellt. Zur Fördervorrichtung 310 gehört eine obere und untere Welle 312, 314, die sich über die gesamte Breite des Schrägfördergehäuses 20 erstrecken. Ferner besteht die Fördervorrichtung 310 beispielsweise aus einem Kettenförderer mit einem oberen Trumm 318 und einem unteren Trumm 316. Im Arbeitseinsatz wird das Erntegut mittels des unteren Trumms 316 über den Boden 266 und 214 des Sohrägfördergehäuses 20 nach oben geleitet. Der obere zurücklaufende Trumm 318 kann sich dabei auf einem Stützelement bzw. auf Gleitschienen 230 abstützen.

Auf der Welle 312 der Fördervorrichtung 310 befindet sich eine Eingangsscheibe 320, die über einen Zugmittelriemen 322 mit einer auf einer Antriebswelle 326 angeordneten Antriebsscheibe 324 antriebsverbunden ist. Die Antriebswelle 326 befindet sich im vorderen unteren Teil 202 unterhalb des Bodens 266 des Schrägfördergehäuses 20. Über die Antriebswelle 326 werden die einzelnen Antriebselemente der Erntebergungsvorrichtung angetrieben, wozu die Fördervorrichtung 310, die Haspel 32, der Mähwerkbalken 46 sowie die Einzugsschnecke 44 gehören.

In Fig. 12 ist eine schematische Darstellung des Steuersystems nebst der elektrischen Schaltelemente zur automatischen Anpassung der Seitenneigung der Schneidwerksplattform 18 mit Bezug auf das Schrägfördergehäuse 20 sowie die automatische Anpassung des flexiblen Schneidwerkes 34 mit Bezug auf den Bodenteil 38 veranschaulicht. Zu dem Steuersystem gehören der elektrische Stromkreis 28 und ein Teil einer elektrohydraulischen Steuervorrichtung 30 (siehe Fig. 1 und 12). Die elektrohydraulische Steuervorrichtung 30/bzw. die als Wegeventil ausgebildete Steuervorrichtung weist einen Anhebeteil 400 und einen Absenkteil 402 auf, die die Hydraulikzylinder 24 entsprechend mit Druckmittel versorgen und somit gewährleisten, daß die Erntebergungsvorrichtung 16 angehoben bzw. abgesenkt wird. Der Anhebe- bzw. Absenkvorgang der Erntebergungsvorrichtung 16 ist so gesteuert, daß eine ruckartige Bewegung der Erntebergungsvorrichtung 16 vermieden wird, da der bzw. die entsprechenden Hydraulikzylinder mit einem Akkumulator 403 verbunden sind, der die von der Erntebergungsvorrichtung ausgehenden Stöße abfängt.

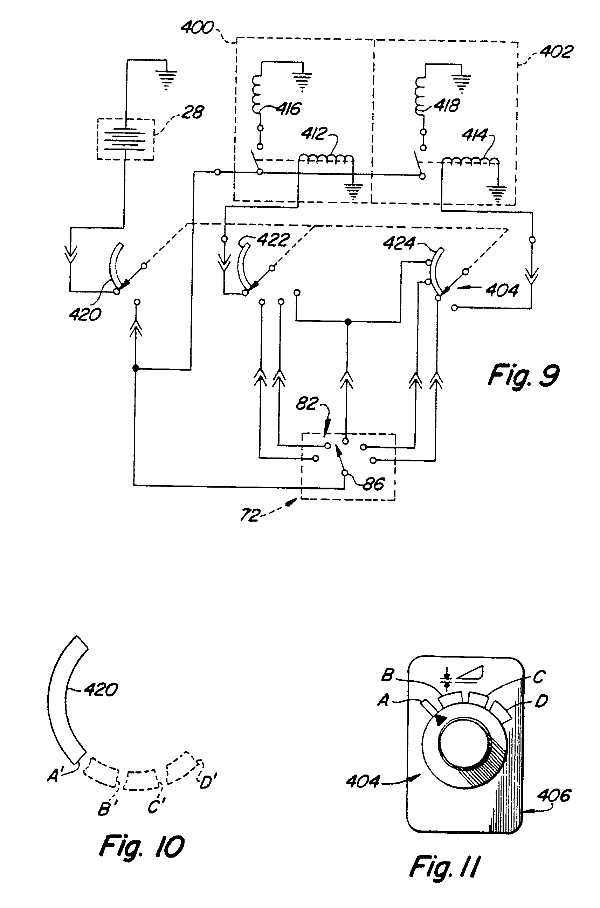

Der Anhebeteil 400 und Absenkteil 402 ist im Detail in der US-A-4 332 126 beschrieben. Wie aus Fig. 12 ferner hervorgeht, ist aber den Hydraulikzylindern 24 je eine Sensorschaltereinrichtung 72 zugeordnet, die auf die Anhebe- bzw. Absenkimpulse des flexiblen Schneidwerkes 34 reagieren und somit die Höhe der Schneidwerksplattform 18 in einem vorgewählten Stellbereich steuern. Ein Teil der in Fig. 12 nicht dargestellten Steuervorrichtung ist in Fig. 9 veranschaulicht. Der Einfachheit halber ist in Fig. 9 lediglich eine Sensorschaltereinrichtung 72 dargestellt.

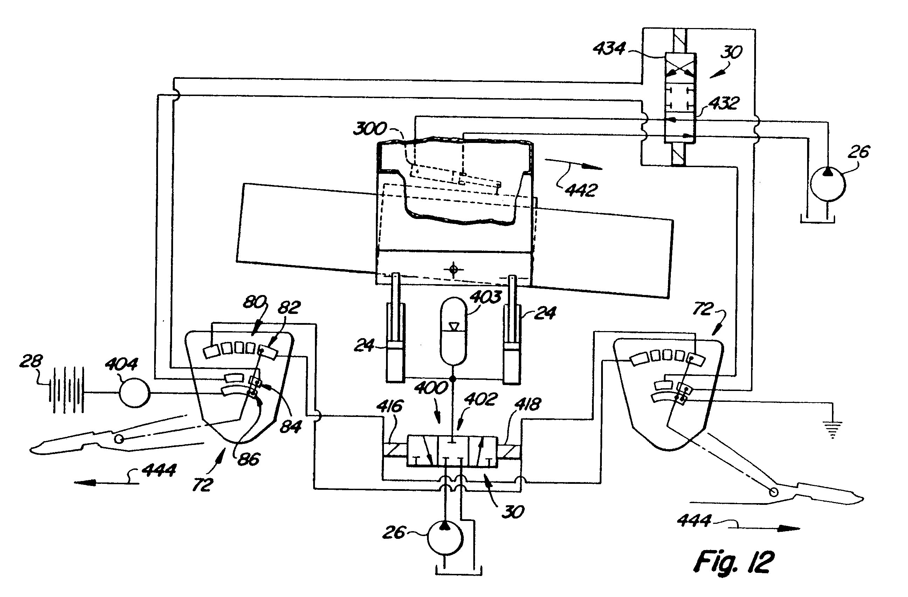

Wie aus den Figuren 9, 10 und 11 hervorgeht, wird aus der Fahrerkabine 14 heraus der nominale Stellbereich des flexiblen Schneidwerkes 34 mit Bezug auf den Bodenteil 38 mittels eines Drei-Pol-Vier-Stellungsschalters 404 bestimmt. Die Position des Stellungsschalters 404 ist, wie aus Fig. 11 hervorgeht, durch entsprechende Symbole kenntlich gemacht, die auf einem Paneel 406 des Stellungsschalters 404 angeordnet sind und die einzelnen Stellstufen der Schneidwerksplattform 18 verdeutlichen. Der Stellungsschalter 404 ist über elektrische Leitungen mit der elektrohydraulischen Steuervorrichtung 30 verbunden (siehe Fig. 1). Eine zweite elektrische Leitung verbindet die elektrohydraulische Steuervorrichtung mit den Sensorschaltereinrichtungen 72. Der Anhebe- und Absenkteil 400 und 402 weist entsprechende Schaltrelais auf, und zwar ein Anhebeschaltrelais 412 sowie ein Absenkschaltrelais 414 sowie eine Anhebespule 416 und eine Absenkspule 418. Wie aus Fig. 11 hervorgeht, ist der Stellungsschalter 404 in seine Aus-Stellung verstellt, die durch den Buchstaben A bezeichnet ist. Ferner läßt sich der Stellungsschalter 404 in die Stellungen B, C und D drehen, die einer entsprechenden Arbeitshöhe des Mähwerkbalkens 46 mit Bezug auf den Bodenteil 38 entsprechen. Der Stellungsschalter 404 ist als sogenannter Drehschalter ausgebildet und weist drei aneinander gekuppelte, koaxial angeordnete und als segmentartige Schleifkontakte ausgerichtete Kontaktelemente 420, 422 und 424 auf, wobei ein jedes Kontaktelement einer entsprechenden Schaltstellung entspricht. Die relative Position eines jeden Kontaktelementes für die entsprechenden vier Schaltstellungen A, B, C und D ist durch die Buchstaben A', B', C' und D' in Fig. 10 veranschaulicht.

Die elektrische Funktion zur Höheneinstellung bzw. zur Steuerung des Absenk- und Anhebevorganges mittels der Sensorschaltereinrichtungen 72 ist ebenfalls nur schematisch in dem Schaltschema gemäß Fig. 9 veranschaulicht. Die spezielle Verdrahtung zwischen den einzelnen Kontaktelementen ist in der schematischen Zeichnung nicht entsprechend gekennzeichnet. In Fig. 9 ist die Kiknüpfung der Kontakte des Ausgangsschaltkontaktes 82 (siehe Fig. 8) veranschaulicht. Hierzu gehören festgelegte Schaltkontakte 426 zum Anheben und Schaltkontakte 428 zum Absenken. Sie sind jeweils an dem äußeren Kreisbogenabschnitt des Ausgangsschaltkontaktes 82 angeordnet. Drei weitere nicht festgelegte Schaltkontakte 430 stehen für Anheben, Neutral oder Absenken je nach Stellung des Stellungsschalters 404.

Das Steuersystem zum Verdrehen bzw. Verschwenken der Schneidwerksplattform 18 gegenüber dem oberen Teil 200 des Schrägfördergehäuses 20 um den Gelekbolzen 270 (siehe Fig.12) umfaßt den Hydraulikzylinder 300, die Sensorschaltereinrichtungen 72 und die elektrohydraulische Steuervorrichtung 30 mit Ventilteilen 432 bzw. 434 zum Rechts- oder Linksdrehen. Der auf einem Kreisbogen angeordnete Ausgangsschaltkontakt 84 zum Verdrehen (siehe auch Fig 8) und entspricht in etwa dem Ausgangsschaltkontakt 82 zum Anheben und Absenken, ist aber einfacher ausgebildet, als er nur zwei Kontaktelemente 436 und 438 aufweist, die auf der Leiterplatte 78 aufgedruckt sind und den entsprechenden Kipp-bzw. Verdrehsignalen entsprechen. Für das seitliche Kippen der Schneidwerksplattform 18 mit Bezug auf das Schrägfördergehäuse 20 gibt es lediglich einen wünschenswerten Einstellpunkt, und zwar die Lage der Schneidwerksplattform 18, in der das Schneidwerk 34 in etwa parallel zur Bodenoberfläche verläuft, so daß hierzu lediglich zwei Kontaktelemente erforderlich sind. Jedoch können auch zahlreichere Kontaktelemente sinnvoll sein, so daß ein größerer Ansprechbereich entsteht die Bedienungsperson die Möglichkeit hat, in Abhängigkeit der Arbeitsbedingungen, beispielsweise der Geschwindigkeit, oder eine präzisere Steuerung der seitlichen Schwenkbewegung auszuführen. Anstelle des bisher beschriebenen Schalters kann auch ein Schalter mit zahlreichen Stellmöglichkeiten vorgesehen sein, der mit dem entsprechenden Stromkreis bestückt ist, um somit den unterschiedlichen Anforderungen Rechnung zu tragen, beispielsweise der Querneigung der Plattform mit Bezug auf das Schrägfördergehäuse auch bei größeren Herstellungstoleranzen.

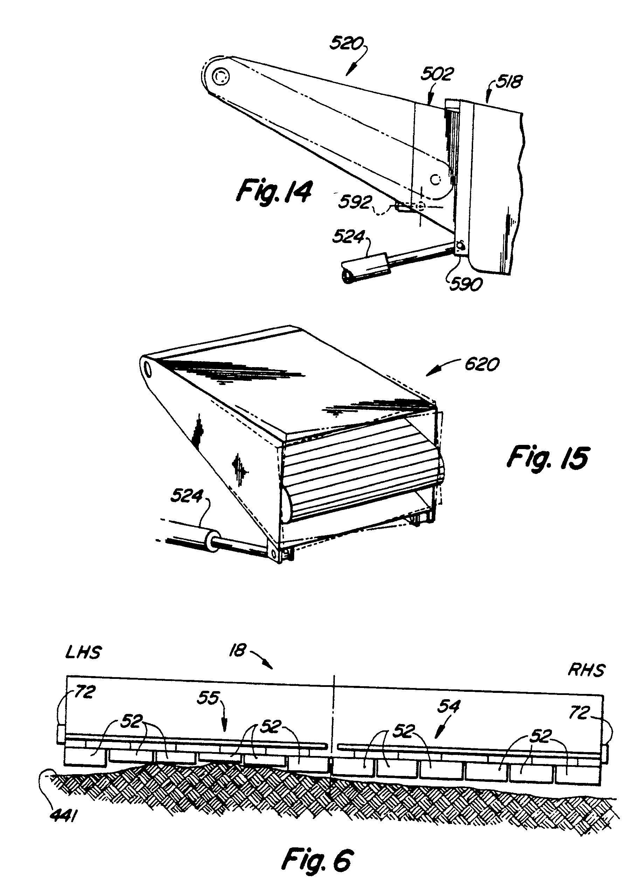

Die beschriebene Sensorwelle bzw. Schalteranordnung ermöglicht eine rechte bzw. linke Höhensteuerung der Schneidwerksplattform. Die einzelnen Kufen 52, die über den Boden fahren, bestimmen mit ihrer am höchsten liegenden die genaue Stellung der zugehörigen Sensorschaltereinrichtung 72 (siehe Fig. 4 und 6).

In den entsprechenden Stellungen der Ausgangsschaltkontakte 82, 84 der Sensorschaltereinrichtungen 72 wird ein entsprechendes Signal zum Anheben, Absenken oder garkeins erzeugt. Die Sensorschaltereinrichtungen 72 können aber auch so ausgelegt werden, daß verschiedene Neutralstellungen möglich sind, um den entsprechenden Arbeitsanforderungen gerecht zu werden. So ist es möglich, schmale Neutralbereiche bzw. Totzonen in dem Schalter vorzusehen, die zur Priorität zugunsten der Querneigungsverstellmöglichkeit gegenüber der Anhebeverstellmöglichkeit führt. Im Ausführungsbeispiel, wie aus Fig. 8 hervorgeht, entspricht eine Neutralstellung für einen Querneigungsimpuls (die Bürste 90 befindet sich mittig im Zwischenraum 440 zwischen den Kontaktelementen 436, 438) einem neutralen Höhenverstellsignal (die Bürste 88 zur Höhensteuerung befindet sich mittig auf dem nicht festgelegten Kontakt 430), wenn der Stellungsschalter 404 sich in seiner Betriebsstellung C befindet (einer Zwischenstellung). Wie aus Fig. 8 hervorgeht, wird durch Drehen der Drehschaltereinrichtung 80 in Abhängigkeit der Bewegung der mit dem Boden in Kontakt stehenden Kufen 52 ein Kippsignal bzw. -impuls abgegeben, bevor sich die Bürste 88 zur Höhensteuerung zu einem stromführenden Schaltkontact 430 (zum Anheben) bewegt hat.

Es wird darauf hingewiesen, daß aufgrund der Schalteranordnung gemäß Fig. 8 der Kippimpuls eine Priorität vor dem Höhenverstellimpuls aufweist, wobei diese Priorität nur mit einem Drei-Pol-Vier-Stellungsschalter 404 (Drehschalter) möglich ist, wenn der Schalter 404 sich in der Stellung C befindet. Es ist möglich, jede gewünschte Arbeitspriorität bzw. Arbeitseigenschaften durch entsprechende Kombination der Kontaktabmessungen oder Kontaktzwischenräume der Kontakte für die Höhensteuerung sowie der Seitenneigung zu erreichen. Es ist beispielsweise möglich, einen einfachen Drehschalter zu verwenden, bei dem alle Neutralstellen für die Höhensteuerung sowie die Seitenneigung gemeinsam auftreten.

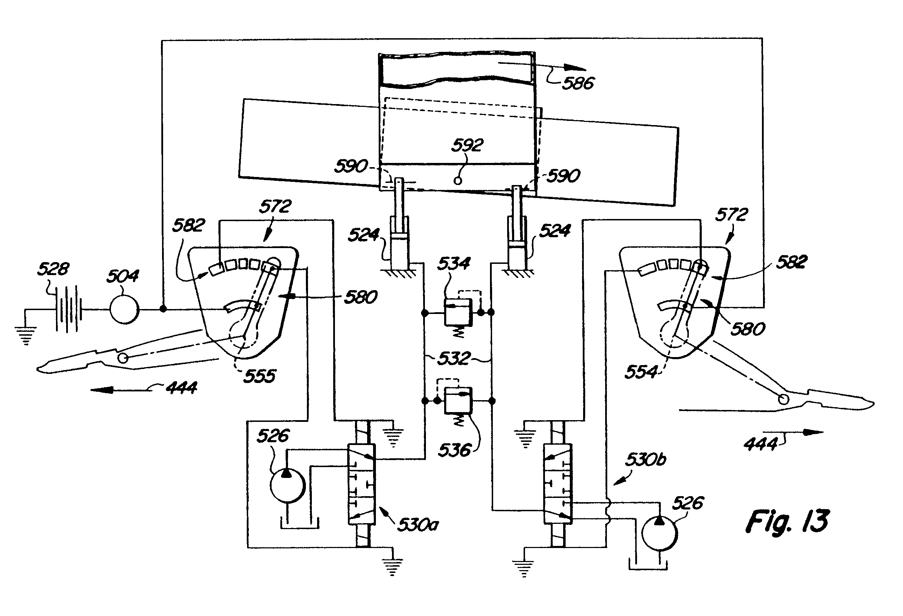

In der Betriebstellung nach Fig. 12, die der in Fig. 6 entspricht, folgen eine oder mehrere Kufen 52 auf der linken Seite der Bodenkontur 441, wobei zumindest eine Kufe so weit angehoben worden ist, daß sie ein Kippsignal rechts an der linken Sensorschaltereinrichtung 72 auslöst. Wie aus Fig. 6 ferner hervorgeht, fällt die Bodenoberfläche zur rechten Seite hin stärker ab, so daß an dieser Seite für die Sensorschaltereinrichtung 72 ein entgegengesetztes Steuersignal ausgelöst wird und hierdurch eine elektrohydraulische Tätigkeit, die dazu führt, daß die Schneidwerksplattform 18 sich zur rechten Seite absenkt, wie dies aus Fig. 12 (Pfeil 442) hervorgeht. Wie aus Fig. 12 ferner zu entnehmen ist, sind der Anhebeteil 400 und des Absenkteil 402 dabei geschlossen. Die Reihenfolge der in Serie angeordneten Ausgangsschaltkontakte 82 zum Anheben ist derart, daß keine Höhenverstellung bei diesen entgegengesetzten Schaltimpulsen ausgelöst wird. Die in Fig. 12 (und auch die noch in beschreibenden und in Fig. 13) dargestellten Sensorschaltereinrichtungen sind in Seitenansicht wiedergegeben, und zwar jeweils vom äußeren rechten bzw. linken Ende der Schneidwerksplattform. Die Pfeile 444 geben die Fahrtrichtung des Mähdreschers 10 an.

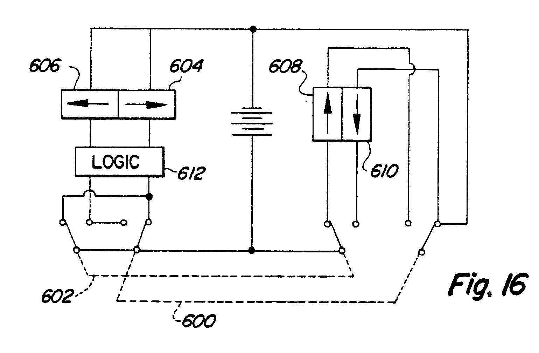

Die Schaltabläufe der Vorrichtung nach Fig 12 ergeben sich aus dieser Figur. Die Höhenschaltkontakte und die Kippschaltkontakte sind in Serie geschaltet, so daß die Schaltimpulse jeweils von beiden Seiten der Schneidwerksplattform entsprechend ausgelöst werden müssen. (Die in Fig. 16 dargestellte Ausführungsform, die nachfolgend noch beschrieben wird, erfordert dies nicht). Einander gleiche Sensorschaltereinrichtungen 72 sind an den entsprechenden Enden der Sensorwelleneinrichtung 54 und 55 vorgesehen. Jedoch erfolgt die Verdrahtung der Ausgangsschaltkontakte 82 so, daß die festgelegten Schaltkontakte 426 zum Anheben dem hinteren Teil des Mähdreschers 10 zugeordnet sind.

Bevor die Bedienungsperson mit dem Mähdrescher 10 in das stehende Getreide des Feldes einfährt, hat sie den Drei-Pol-Vier-Stellungsschalter 404 in der Fahrerkabine 14 auf Schwimmstellung zu stellen, in der das flexible Schneidwerk 34 der Bodenkontur folgt (Schwimmstellung). Danach läßt sich mittels in der Zeichnung und der Beschreibung nicht weiter dargestellter Steuerelemente die Erntebergungsvorrichtung 16 manuell so weit absenken, daß eine oder mehrere Kufen 52 des Schneidwerkes mit dem Boden Kontakt haben und somit der Höhensteuerung bzw. der Seitenneigung der Erntebergungsvorrichtung 16 zur Verfügung stehen. Nach Loslassen des manuellen Schalters zur Höhensteuerung wird die automatische Steuervorrichtung wirksam. Da beiden Sensorschaltereinrichtungen 72 die Drehschaltereinrichtungen 80 direkt mit den Sensorwelleneinrichtungen 54 bzw. 55 entsprechend verbunden sind, werden die einzelnen Stellungen des linken bzw. rechten Teils des schwimmend angeordneten Schneidwerkes 34 erfaßt, so daß die Bürsten 88 und 90 auf den Ausgangs Schaltkontakten 82 und 84 der Leiterplatte 78 entsprechend bewegt werden und Schaltimpulse auslösen, die bewirken, daß ein Höhensteuerimpuls bzw. ein Kippimpuls ausgelöst wird, um die Schneidwerksplattform 18 anzuheben bzw. abzusenken, um die gewünschte Schwimmstellung für das Schneidwerk 34 aufrechtzuerhalten und dieses in etwa parallel zum Boden hin auszurichten. Es wird darauf hingewiesen, daß das Steuersignal zum Kippen der Schneidwerksplattform in beiden Richtungen positiv ist, da ein doppelseitig beaufschlagbarer Hydraulikzylinder 300 vorgesehen ist. Bei den einfach wirkenden Hydraulikzylindern 24 ist das Anheben positiv und das Absenken negativ, da in Abhängigkeit des Gewichtes der Erntebergungsvorrichtung 16 Druckmittel aus den Hydraulikzylindern abfließt.

Solange die einzelnen Kufen 52 Kontakt mit der Bodenoberfläche haben, sind die Schalterstellungen der linken und rechten Sensorschalteinrichtung gleich, d. h. die Schneidwerksplattform 18 wird angehoben bzw. entsprechend abgesenkt, ohne daß eine Kippbewegung der Schneidwerksvorrichtung 18 eintritt. Tritt jedoch eine Veränderung in der Bodenoberfläche auf und somit eine Diskrepanz zwischen dem Signal der linken bzw. der rechten Sensorschalteinrichtung (siehe Fig. 6), so wird das Kippsystem für die Schneidwerksplattform 18 aktiviert und die Schneidwerksplattform mittels des Hydraulikzylinders 300 entsprechend gesteuert, wobei sie gegenüber dem feststehenden oberen Teil 200 des Schrägfördergehäuses um die Längsachse 204 kippt bzw. dreht.

Wie vorstehend beschrieben, benötigt das Steuersystem gemäß Fig. 12 ein aktives Signal bzw. ein Wechselsignal von beiden Seiten der Schneidwerksplattform, bevor die Höhensteuervorrichtung bzw. Kippvorrichtung aktiviert wird. Bei typischen Arbeitseinsätzen wird durch den Wechsel der Bodenoberfläche das entsprechende Doppelsignal ausgelöst, so daß das System adäquat diesen Anforderungen folgt und die entsprechenden Schaltimpulse auslöst. Trifft jedoch die eine Seite der Schneidwerksplattform 18 auf einen höherliegenden Bodenteil, so wird ein Schaltimpuls "Heben" bzw. "Kippen" auf der einen Seite ausgelöst, während die andere Seite neutral bleibt, so daß nicht unmittelbar ein Anheben bzw. ein Kippen erfolgt und die Hydraulikzylinder somit nicht aktiviert werden. Doch aufgrund der Unterstützung des Akkumulators 403 kann sich die Schneidwerksplattform 18 nach oben bewegen, ohne daß ein Kippsignal, aber ein Absenksignal an einer der Seiten der Schneidwerksplattform ausgelöst wird, wodurch eine Kippbewegung ausgelöst wird. Das gleiche geschieht in entgegengesetzter Form, wenn die Schneidwerksplattform mit einer Seite auf eine Mulde auftritt.

Das zuvor beschriebene Steuersystem wirkt einmal als Höhensteuervorrichtung für Handbetrieb und für Automatikbetrieb, um die Schneidwerksplattform 18 entweder anzuheben oder abzusenken, auch wenn sie quer geneigt ist. Befindet sich jedoch die Schneidwerksplattform 18 relativ dicht über dem Boden bzw. hat sie Bodenkontakt, so wird automatisch eine Korrektur vorgenommen und die Seitenneigung der Schneidwerksplattform korrigiert. Es kann jedoch wünschenswert sein, in der Steuervorrichtung Vorkehrungen zu treffen, die eine automatische Ausrichtung der Schneidwerksplattform 18 herbeiführen, wenn diese von ihrer Arbeitsstellung in ihre Transportstellung verschwenkt wird.

Die vorteilhafte Ausbildung des Schrägfördergehäuses 20 sowie der zugehörigen Antriebselemente weist weitere Vorteile auf. Die Verlängerung der Fördervorrichtung 310 in die Schrägfördergehäuse-Verlängerung, d. h. in den vorderen Teil 202 des Schrägfördergehäuses 20, bewirkt eine weiterhin gute Förderung des Erntegutes zwischen der Einzugsschnecke und dem Schrägfördergehäuse, so daß nicht zusätzliche Förderelemente, beispielsweise eine Trommel, in diesem Bereich notwendig sind.

Ferner sind keine weiteren Veränderungen an den Antriebsmitteln notwendig, um eine Verschwenkung der Schneidwerksplattform 18 gegenüber dem Schrägfördergehäuse 20 herbeiführen zu können. Im Antriebssystem tritt kaum eine Relativbewegung auf, und zwar nur in dem Eingangszugmittelgetriebe, das aus der Eingangsscheibe 320, der getriebenen Antriebscheibe 324 und dem Zugmittelriemen 322 besteht, und bei der Antriebswelle 326 mit Förderkette, wobei sich die Antriebswelle 326 gegenüber der oberen Welle 312 verdreht; solange die Kippbewegung bzw. die Querneigung der Schneidwerksplattform 18 gegenüber dem Schrägfördergehäuse 20 nicht mehr als 3° beträgt, sind die Relativbewegungen vernachlässigbar bzw. können leicht toleriert werden.

Eine ausreichende Förderwirkung im Schrägfördergehäuse 20 wird aufrechterhalten, da im kritischen Aufnahmebereich des vorderen bzw. unteren Teils 202 des Schrägfördergehäuses 20 ein festes Verhältnis zwischen dem Trumm 316 und dem Boden 266 aufrechterhalten wird. Die beschriebene Anordnung läßt jedoch geringfügige Änderungen im Abstand zwischen dem Trumm 316 und dem Boden 214 zu, wenn die Schneidwerksplattform 18 quer geneigt wird. Der ausgestellte Teil (siehe Fig. 2) des vorderen Teils des Schrägfördergehäuses mit den Teilen 246, 248 trägt dazu bei, daß die Abstände zwischen der Förderkette und den Seitenwänden des Schrägfördergehäuses 20 stets ausreichend groß sind, so daß eine ausreichende bzw. effektive Förderung gewährleistet ist.

Die Schneidwerksplattform 18 mit der zugehörigen Schwenkvorrichtung (Gelenkachse 206) wird durch die obere Drehvorrichtung stabilisiert, in der das Gestänge 292 lang genug ist, so daß in einem bestimmten Bereich eine Oszillation zwischen der Schneidwerksplattform 18 und dem Schrägfördergehäuse möglich ist, wobei geringe Änderungen der effektiven Länge des Gestänges 292 eintreten, und der vorher eingestellte Abstand zwischen dem oberen Teil des Schrägfördergehäuses und dem unteren Teil des Schrägfördergehäuses im wesentlichen aufrechterhalten wird. Die geneigt verlaufende Gelenkachse für das obere Ende der Ösen der Halterung 242 und 244 und des Kugelementes 294 sowie der zugehörigen Vertiefung 286 an beiden Enden des Gestänges 292 verringert Zugspannungen im Gestänge und in den zugehörigen Schrägfördergehäuseteilen, an denen das Gestänge 292 angeschlossen ist.

Das erste Ausführungsbeispiel weist also den Vorteil auf, daß keine Modifikation der Schneidwerksplattform notwendig ist, einschließlich der Antriebsmittel.

Die weiteren Ausführungsbeispiele gemäß Fig. 14 und 15 sind einander ähnlich, so daß der für die Kippbewegung bzw. Querneigung der Schneidwerksplattform 18 zuständige Hydraulikzylinder 300 eliminiert ist und die Querneigung bzw. Verschwenkung der Schneidwerksplattform gegenüber dem übrigen Teil des Schrägfördergehäuses durch differenzierte Betätigung von zwei mit Abstand zueinander angeordneten Hydraulikzylindern 524 zum Anheben bzw. Absenken erfolgt. Die Steuerlogik ergibt sich aus Fig. 13 und zeigt, daß das Steuersystem in Abhängigkeit eines Steuerimpulses von einer der Seiten des Schrägfördergehäuses steht, so daß die entsprechenden Hydraulikzylinder 524 unabhängig voneinander gleichmäßig oder auch entgegengesetzt zueinander betätigt werden können. Das elektrohydraulische Steuersystem ist somit einfacher als das Steuersystem aus dem ersten Ausführungsbeispiel, insbesondere wenn der gleiche Betrag an Sensibilität für beide Verstellvorrichtungen einmal für die Querneigung, einmal für die Höhenverstellung akzeptiert wird. Zwei einander identische Sensorschaltereinrichtungen 572 weisen hierzu nur einen einzigen Ausgangsschaltkontakt 582 auf. Die für die Höhensteuerung notwendigen Schaltkontakte sind im Detail in der US-A-4 332 126 beschrieben.

Die in Fig. 14 und 15 dargestellten Ausführungsformen verwenden beide die in Fig. 13 dargestellte Steuervorrichtung. Die Steuerung der Querneigung sowie der Höhe erfolgt über die Steuerimpulse aus den Ausgangsschaltkontakten 582 der Sensorschaltereinrichtungen 572. Die Auswahl über die Einstellung der Höhe des flexiblen Schneidwerkes 34 mit Bezug auf den Bodenteil 38 der Schneidwerksplattform 18 erfolgt mittels eines drehbaren Stellungsschalters 504 in der Fahrerkabine 14. Die Steuerung der Querneigung und der Höhe erfolgt über die beiden symmetrisch angeordneten, mit Abstand zueinander vorgesehenen, einfach wirkende Hydraulikzylinder 524. Die hydraulische Einrichtung wird über eine Pumpe 526 mit Druckmittel versorgt (siehe Fig. 13), während die elektrische Einrichtung über eine Batterie 528 mit Strom versorgt wird. Der Druckmittelfluß zu und von den Hydraulikzylindern 524 wird über Steuerventile 530a und b gesteuert. Hierzu sind die Steuerventile 530a und b über Hydraulikleitungen 532 mit den Hydraulikzylindern 524 verbunden. Die beiden Hydraulikleitungen 532 stehen über druckgesteuerte Druckbegrenzungsventile 534, 536 in Wirkverbindung.

Die Steuerung des flexiblen Schneidwerkes 34 erfolgt ebenfalls über die Kufen 52, die Bodenkontakt haben, um somit rechte und linke Sensorwelleneinrichtungen 554 und 555 zu beeinflussen. Drehschaltereinrichtungen 580, die mit den Ausgangsschaltkontakten 582 in Wirkverbindung stehen, beeinflussen die Höhenlage bzw. die Stellung des Schneidwerkes 34 mit Bezug auf den Bodenteil 38.

Wie aus der schematischen Darstellung gemäß Fig. 13 hervorgeht, ist das Zwei-Zylinder-System einfacher, da lediglich zwei separate Hydraulikzylinder zum Anheben bzw. Absenken notwendig sind und nicht ein zusätzlicher Hydraulikzylinder, der eine Verdrehung der Schneidwerksplattform gegenüber dem oberen Teil 200 des Schrägfördergehäuses herbeiführt. Die einzelnen linken und rechten Hydraulikzylinder 524 stehen lediglich in Abhängigkeit der Sensorschaltereinrichtungen 572, die in entsprechender Weise die Hydraulikzylinder aktivieren, und zwar in Abhängigkeit der Schaltimpulse des Logistikschaltplanes.

Die möglicherweise auftretenden Signalkombinationen sind nachfolgend aufgelistet:

## Impulssignal

| Linke Seite | Rechte Seite | Arbeitsergebnis |
| --- | --- | --- |
| Absenken | Nein | Nach links kippen |
| Nein | Anheben | Nach links kippen |
| Absenken | Anheben | Nach links kippen |
| Anheben | Nein | Nach rechts kippen |
| Nein | Absenken | Nach rechts kippen |
| Anheben | Absenken | Nach rechts kippen |
| Absenken | Absenken | Absenken |
| Anheben | Anheben | Anheben |

Die Steuerbedingungen gemäß Fig. 13 sind die gleichen wie in Fig. 12. Die linke Sensorschaltereinrichtung 572 initiiert den Anhebevorgang für die linke Seite und den Absenkvorgang für die rechte Seite der Schneidwerksplattform. Somit wird durch die Aktivierung des hydraulischen Systems der linke Hydraulikzylinder ausgefahren und bewirkt wegen der dann ungleichen Gewichtsverteilung der Schneidwerksplattform, ein Einfahren des rechten Hydraulikzylinders, aus dem dann Druckmittel abfließt, so daß die Schneidwerksplattform 18 gemäß Pfeil 586 kippt bzw. gedreht wird.

Im Ausführungsbeispiel gemäß Fig. 14 und 15 mit einem Steuersystem gemäß Fig. 13 bewirkt ein Steuersignal lediglich von einer Seite der Schneidwerksplattform, daß die Schneidwerksplattform gekippt wird, wobei lediglich ein Hydraulikzylinder 524 zum Anheben im Arbeitseinsatz ist. Die Anschlußstelle 590 des nicht wirksamen Hydraulikzylinders wird ein fester Schwerpunkt für die Schneidwerksplattform (siehe Fig. 13 - gestrichelte Darstellung des Schrägfördergehäuses). Im Ausführungsbeispiel gemäß Fig. 14 dreht sich die Schneidwerksplattform 518 mit Bezug auf das Schrägfördergehäuse 520 um die Längsachse 592 weiter, die gemeinsam mit dem Schrägfördergehäuse ein wenig abgesenkt bzw. angehoben wird, wenn der entsprechende Hydraulikzylinder auf der einen Seite betätigt wird.

Die Schneidwerksplattform 518 im Ausführungsbeispiel gemäß Fig. 14 sowie das Schrägfördergehäuse 520 sind ähnlich der Schneidwerksplattform 18 und dem Schrägfördergehäuse 20 in den Ausführungsbeispielen gemäß Fig. 1 bis 3 mit Ausnahme, daß für diese Anordnung keine Halterungen für einen Hydraulikzylinder zum Kippen der Schneidwerksplattform 518 erforderlich sind und die Schrägfördergehäuse-Verlängerung 502 zur Anschlußstellung 590 zum direkten Anschluß der Hydraulikzylinder 524 zum Anheben bzw. Absenken aufwürt. Die weiteren Funktionen des Schrägfördergehäuses sowie die Anordnung der einzelnen Förderelemente entsprechen den Funktionen und Anordnungen des Schrägfördergehäuses 20 gemäß Fig. 1 bis 3.

Im Ausführungsbeispiel gemäß Fig. 15 ist ebenfalls ein Zwei-Zylinder-System verwendet, um eine Verschwenkung des unteren Teils des Schrägfördergehäuses 620 gegen den oberen Teil des Schrägfördergehäuses 620 herbeizuführen (siehe die gestrichelte Darstellung des Schrägfördergehäuses). Im Ausführungsbeispiel gemäß Fig. 15 sind die Hydraulikzylinder 524 am Schrägfördergehäuse 620 angeschlossen. Es ist jedoch auch möglich, diese an der in der Zeichnung nicht dargestellten Schneidwerksplattform anzuschließen. Hierdurch wird die von den Hydraulikzylindern ausgehende Stellkraft vergrößert und somit die Stabilität und eine bessere Ansprechbarkeit der Hydraulikzylinder erreicht, weil sie mit größerem Hebelarm auf die Schneidwerksplattform einwirken.

Das seitlich wirkende Steuersystem, das vollständig in Abhängigkeit der Hydraulikzylinder zum Anheben bzw. Absenken der Schneidwerksplattform steht, ist insbesondere deshalb vorteilhaft, weil hierdurch Kosten eingespart werden können, zumal die Anschlußhalterungen und auch ein Hydraulikzylinder eingespart werden können. Hierdurch wird auch der Stellbereich bzw. die Auf- und Abwärtsbewegung des Hydraulikzylinders vergrößert und eine bessere Verteilung der Stellkräfte, die auf die Schneidwerksplattform 518 einwirken, erreicht. Ferner wird der Angriffswinkel mit Bezug auf die Längsachse 592 der Schneidwerksplattform 518 verbessert. Die zwischen dem Schrägfördergehäuse 520 und der Schrägfördergehäuse-Verlängerung 502 liegende Fläche kann ferner mit Bezug auf die Standfläche des Mähdreschers geneigt verlaufend angeordnet sein, so daß die Längsachse 592 ebenfalls nach unten geneigt verläuft. Hierdurch lassen sich die Hydraulikzylinder 524 leichter unterhalb der Unterseite des Schrägfördergehäuses und im Bereich der Längsachse 592 der Schneidwerksplattform 518 montieren.

Im vierten Ausführungsbeispiel (Fig 16) ist lediglich eine schematische Anordnung des Steuerkreislaufes zur Verstellung der Schneidwerksplattform, wie sie in Fig. 1 bis 3 beschrieben ist, dargestellt. Die Schneidwerksplattform läßt sich mit dieser Steuervorrichtung ebenfalls um eine Gelenkachse seitlich gegenüber dem Schrägfördergehäuse verstellen. Dieser Stellvorgang wird mit einem Kippzylinder herbeigeführt, während die Steuerung der Höhenlage des Schrägfördergehäuses mittels zweier gleichzeitig arbeitender Hydraulikzylinder herbeigeführt wird. Die elektrohydraulischen Steuerkomponenten und Kontaktschalter entsprechen denen des ersten Ausführungsbeispiels. Wie aus Fig. 16 hervorgeht, unterscheidet sich die Ausführungsform gemäß Fig. 16 von der ersten Ausführungsform dadurch, daß die Kontaktschalter der rechten und linken Sensorschaltereinrichtungen 600 und 602 mit Kippstellvorrichtungen 604, 606 parallel geschaltet sind. Die Steuerimpulse bzw. Steuerbedingungen sind in Fig. 16 veranschaulicht (ähnlich wie in Fig. 12 und 13). Die linke Stellung der Sensorschaltereinrichtung 600 und 602 bedeutet Anheben, während die rechte Stellung Absenken bedeutet. Ähnlich wie im ersten Ausführungsbeispiel sind Stellvorrichtungen 608, 610 mit den Schaltkontakten zum Anheben bzw. zum Absenken in Reihe geschaltet. Der Logikschaltkreis 612 ist zwischen den Sensorschaltereinrichtungen 600 und 602 und den Kippstellvorrichtungen 604 und 606 vorgesehen. Der Logikschaltkreis inaktiviert das Kippsteuersystem, wenn ein Anhebeimpuls von beiden Seiten der Schneidwerksplattform ausgeht, da sonst ein derartiges Signal bzw. ein derartiger Impuls im Gegensatz zu einem Kippimpuls stehen würde. Die möglichen Impulskombinationen und Arbeitsergebnisse für dieses Ausführungsbeispiel sind die gleichen wie bei dem Zwei-Zylinder-System gemäß Fig. 14 und 15 und der in Fig. 13 beschriebenen Steuervorrichtung sowie der in der Beschreibung aufgeführten tabellarischen Erfassung der einzelnen Impulswerte bzw. Arbeitsergebnisse. Das Steuersystem unterscheidet sich von dem in Fig. 12 dargestellten Steuersystem dadurch, daß lediglich die Meßgröße bzw. Impulsgröße von der einen Seite der Schneidwerksplattform erfaßt wird. Verwendet man die Druckbegrenzungsventile 534, 536 gemäß Fig. 13 auch für die Hydraulikzylinder gemäß Fig. 14 und 15, so wirken diese im Grenzkippbereich der Schneidwerksplattform. Wie bereits ausgeführt, ist der Kippwinkel der Schneidwerksplattform gegenüber dem Schrägfördergehäuse auf ca. 3° mit Bezug auf die Normalebene begrenzt. Hierzu können entsprechende Anschläge vorgesehen sein. Ist jedoch die Bodenunebenheit relativ groß und spricht das System noch an, obwohl die Schneidwerksplattform nicht weiter gegenüber dem Schrägfördergehäuse gekippt werden soll, dann öffnen die entsprechenden Druckbegrenzungsventile 534, 536 und gestatten, daß Druckmittel zu den Hydraulikzylindern fließt, die ein Anheben des Schrägfördergehäuses bzw. der Schneidwerksplattform bewirken sollen.

## Patentansprüche
## Patentansprüche für folgende Vertragsstaaten : DE, FR, GB

1. Mähdrescher (10) mit einer über zwei Hydraulikzylinder (24 bzw. 524) an ein Schrägfördergehäuse (20, 520 bzw. 620) höhenverstellbar angeordneten und an ihrer Unterseite mit zahlreichen nebeneinander liegenden Bodenkontaktelementen (52) versehenen Erntebergungsvorrichtung (16), wobei die Bodenkontaktelemente (52) die Bodenoberfläche über die gesamte Breite der Erntebergungsvorrichtung (16) abtasten und mindestens eine Sensorschaltereinrichtung (72 bzw. 572) eines elektrohydraulischen Systems betätigen, über das die Hydraulikzylinder (24 bzw. 524) in einem die Erntebergungsvorrichtung (16) automatisch in vorgegebenen Grenzen anhebenden und absenkenden Sinne betätigbar sind, dadurch gekennzeichnet, daß die Erntebergungsvorrichtung (16) als Einheit über das elektrohydraulische System um eine in Fahrtrichtung des Mähdreschers (10) verlaufende Achse automatisch in Abhängigkeit von der Bodenbeschaffenheit verstellbar ist und daß das Abtasten über die gesamte Breite du Erntebergungsvorrichtung (16) auch zum Verstellen der Erntebergungsvorrichtung (16) um die in Fahrtrichtung verlaufende Achse, ausgenützt wird.

2. Mähdrescher nach Anspruch 1, dadurch gekennzeichnet, daß die Bodenkontaktelemente (52) in eine rechte und in eine linke Gruppe aufgeteilt sind, wobei jede Gruppe mit einer Sensorschaltereinrichtung (72 bzw. 572) verbunden ist.

3. Mähdrescher nach Anspruch 1, dadurch gekennzeichnet, daß das Schrägfördergehäuse (20) mit einer quer verlaufenden Antriebswelle (326) ausgerüstet ist, die in einem am vorderen Ende des Schrägfördergehäuses (20) vorgesehenen, die Erntebergungsvorrichtung (16) seitenkippbar aufnehmenden Anschlußrahmen (268) gelagert ist und die Arbeitswerkzeuge der Erntebergungsvorrichtung antreibt.

4. Mähdrescher nach Anspruch 1, dadurch gekennzeichnet, daß das Schrägfördergehäuse (20) einen nach hinten ansteigenden Boden (214) aufweist, wobei zumindest der untere mittlere Teil (216, 218) des Bodens nach oben gewölbt ausgebildet ist.

5. Mähdrescher nach einem oder mehreren der vorherigen Ansprüche, dadurch gekennzeichnet, daß der Anschlußrahmen (268) in seinem unteren Bereich einen Gelenkbolzen (270) aufweist, über den der Anschlußrahmen (268) am Schrägfördergehäuse (20) um eine sich in Längsrichtung des Schrägfördergehäuses verlaufende Achse seitlich kippbar bzw. schwenkbar ist.

6. Mähdrescher nach Anspruch 5, dadurch gekennzeichnet, daß der Anschlußrahmen (268) zum Anschluß an das Schrägfördergehäuse (20) zumindest ein sich in Längsrichtung des Schrägfördergehäuses erstreckendes Gestänge (292) aufweist, das einenends mit dem Schrägfördergehäuse (20), anderenends mit dem Anschlußrahmen (268) verbunden ist und einen seitlichen Versatz des oberen Teils des Anschlußrahmens (268) gegenüber dem Schrägfördergehäuse (20) gestattet.

7. Mähdrescher nach Anspruch 1, dadurch gekennzeichnet, daß zwischen dem Schrägfördergehäuse (20) und dem Anschlußrahmen (268) zur Verstellung der Querneigung des die Erntebergungsvorrichtung (16) aufnehmenden Anschlußrahmens (268) gegenüber dem Schrägfördergehäuse ein Hydraulikzylinder (300) vorgesehen ist.

8. Mähdrescher nach einem oder mehreren der vorherigen Ansprüche dadurch gekennzeichnet, daß alle Hydraulikzylinder (24,300,524) mit der linken und rechten Sensorschaltereinrichtung (72,672) wirkungsmäßig verbunden sind und jede Sensorschaltereinrichtung mit einem Teil der Erntebergungsvorrichtung (16) wirkungsmäßig verbunden ist.

9. Mähdrescher nach Anspruch 2, dadurch gekennzeichnet, daß zumindest eine Gruppe Bodenkontaktelemente (52) bis etwa mittig zwischen die beiden äußeren Seiten der Erntebergungsvorrichtung (16) geführt ist.

10. Mähdrescher nach Anspruch 9, dadurch gekennzeichnet, daß zu den in der linken oder rechten Gruppe angeordneten Bodenkontaktelementen (52) ein Bodenkontaktelement gehört, das zum Mittelpunkt bzw. zur Mittellinie der Erntebergungsvorrichtung (116) näher liegt als die übrigen Bodenkontaktelemente.

11. Mähdrescher nach Anspruch 2, dadurch gekennzeichnet, daß die Bodenkontaktelemente (52) einer jeden Gruppe wirkungsmäßig miteinander verbunden sind und daß das zugehörige elektrohydraulische System derart ausgebildet ist, daß die Hydraulikzylinder (24,524) einen Teil der Erntebergungsvorrichtung (16) beim Auftreten zahlreicher AbsenkSchaltimpulse nur in Abhängigkeit des jenigen Schaltimpulses absenken, der von dem Bodenkontaktelement (52) ausgeht, das dem Boden am nächsten ist.

12. Mähdrescher nach Anspruch 11, dadurch gekennzeichnet, daß die linken und rechten Gruppen der Bodenkontaktelemente (52) mit je einer mit Bezug auf die Bewegungsrichtung des Mähdreschers (10) quer verlaufenden Welle (58) wirkungsmäßig verbunden sind, die jeweils über die Bodenkontaktelemente (52) drehbar und mit einer Sensorschaltereinrichtung (72) verbunden ist, über die zur Steuerung der Lage der Erntebergungsvorrichtung (16) ein Schaltimpuls an die Stellvorrichtung bzw. die Hydraulikzylinder (24,300,524) geleitet wird.

13. Mähdrescher nach einem oder mehreren der vorherigen Ansprüche, dadurch gekennzeichnet, daß die nach vorne gerichtete Stirn- bzw. Anschlußfläche des Schrägfördergehäuses (20,520,620) zum Anschluß der Erntebergungsvorrichtung (16) gegenüber dem Mähdreschergehäuse um eine aufrechtstehende Ebene seitlich verdrehbar bzw. kippbar ist.

14. Mähdrescher nach einem oder mehreren der vorherigen Ansprüche, dadurch gekennzeichnet, daß das Schrägfördergehäuse (20,520,620) um seine Längsachse torsionsartig verdrehbar ist, wobei das hintere Ende des Schrägfördergehäuses nicht drehbar am Mähdreschergehäuse angeordnet ist und an das vordere Ende des Schrägfördergehäuses (20,520,620) die Hydraulikzylinder (24,524) zum Anheben derart angeschlossen sind, daß bei dem Ausfahren eine Kolbenstange eines Hydraulikzylinders (24,524) die vordere Anschlußfläche des Schrägfördergehäuses um eine Längsachse des Schrägfördergehäuses (20,520,620) gedreht wird und somit die entsprechende Bewegung der aufrecht verlaufenden Anschlußfläche zur automatischen Anpassung der Erntebergungsvorrichtung (16) an die Bodenoberfläche herbeiführt.

15. Mähdrescher nach Anspruch 14, dadurch gekennzeichnet, daß in den Hydraulikleitungen zu den Hydraulikzylindern (24,524) zum Anheben Druckbegrenzungsventile (534, 536) angeordnet sind, die bei einem bestimmten Druck öffnen, so daß zwischen den beiden Hydraulikzylindern eine Druckmittelverbindung herstellbar ist, wobei den Hydraulikzylindern weitere Druckbegrenzungsventile bzw. Hubbegrenzungselemente zugeordnet sind, die verhindern, daß das Schrägfördergehäuse über einen bestimmten Winkelbereich hinaus verdreht wird.

16. Mähdrescher nach einem oder mehreren der vorherigen Ansprüche, dadurch gekennzeichnet, daß beiderseits von Gelenkbolzen (232) je ein Hydraulikzylinder (24) vorgesehen ist und daß eine jede Sensorschaltereinrichtung (72) mit den Hydraulikzylindern derart wirkungsmäßig verbunden ist, daß sie getrennt steuerbar sind.

17. Mähdrescher nach einem oder mehreren der vorherigen Ansprüche, dadurch gekennzeichnet, daß die Hydraulikzylinder (24) mit einer Betätigungsvorrichtung zur Höhensteuerung der Erntebergungsvorrichtung (16) und einer Betätigungsvorrichtung zur Verstellung der Querneigung ausgerüstet sind, wobei die Sensorschaltereinrichtungen (72) in Reihe mit der Betätigungsvorrichtung zur Höhensteuerung derart geschaltet sind, daß zuerst der Anhebebzw. der Absenkimpuls von beiden Seiten der Erntebergungsvorrichtung (16) entgegengenommen werden muß, bevor die Betätigungsvorrichtung zur Verstellung der Querneigung der Erntebergungsvorrichtung (16) aktiviert wird.

18. Mähdrescher nach Anspruch 17, dadurch gekennzeichnet, daß Sensorschaltereinrichtungen (72) derart in Reihe an die Betätigungsvorrichtung zur Verstellung der Querneigung der Erntebergungsvorrichtung (16) angeschlossen sind, daß nach Erhalt einer Kombination von ungleichen Schaltimpulsen von beiden Seiten der Erntebergungsvorrichtung die Betätigungsvorrichtung zur Querneigung der Erntebergungsvorrichtung aktiviert wird.

19. Mähdrescher nach Anspruch 18, dadurch gekennzeichnet, daß die Betätigungsvorrichtung zur Höhensteuerung der Erntebergungsvorrichtung (16) mit einem Akkumulator (403) zur federnden Abstützung der Erntebergungsvorrichtung (16) ausgerüstet ist.

20. Mähdrescher nach einem oder mehreren der vorherigen Ansprüche, dadurch gekennzeichnet, daß Sensorschaltkontakte (420, 422) parallel an die Betätigungsvorrichtung (604, 606) zur Querneigung der Erntebergungsvorrichtung (16) angeschlossen sind, wobei zwischen Sensorschaltkontakten und der Betätigungsvorrichtung ein elektrischer Logikschaltkreis (612) geschaltet ist, so daß die Betätigungsvorrichtung zur Einstellung der Querneigung nicht auf gleich starke Schaltimpulse, jedoch auf ungleich starke Schaltimpulse der Sensorschaltkontakte von beiden Seiten oder auf Schaltimpulse von der einen oder anderen Seite der Erntebergungsvorrichtung (16) anspricht.

21. Mähdrescher nach einem oder mehreren der vorherigen Ansprüche, dadurch gekennzeichnet, daß eine

EP 0 234 585 B1

jede Sensorschaltereinrichtung (72) jeweils zwei Satz Ausgangsschaltkontakte (82) aufweist, wobei ein jeder Satz für die Betätigungsvorrichtung zur Höhensteuerung und Einstellung der Querneigung vorgesehen ist und die Anschlüsse der Ausgangskontakte derart sind, daß die Betätigungsvorrichtung zur Höhensteuerung nur bei zwei gleich großen Schaltimpulsen von Ausgangsschaltkontakten aktiviert wird, während die Betätigungsvorrichtung zur Einstellung der Querneigung nur bei einem Schaltimpuls aktiviert wird.

22. Mähdrescher nach Anspruch 21, dadurch gekennzeichnet, daß die Sensorschaltereinrichtungen (72) für die Höhensteuerung und Querneigung zwei Schaltkontakte aufweisen, die durch nicht leitende Kontakte getrennt sind, wobei die nicht leitenden Kontakte unterschiedlich lang sein können.

23. Mähdrescher nach Anspruch 22, dadurch gekennzeichnet, daß die nicht leitenden Schaltkontakte der Einstellvorrichtung für die Querneigung einen kleineren Abstand untereinander aufweisen als der Abstand zwischen nicht leitenden Schaltkontakten für die Höhensteuerung.

24. Mähdrescher nach Anspruch 23, dadurch gekennzeichnet, daß zumindest einer der Sätze der Sensorschaltereinrichtungen (72) zahlreiche Schaltkontakte aufweist, die dem Stellbereich der Sensorschaltereinrichtung entsprechen, und daß die Kontakte wahlweise an die Betätigungseinrichtung der Hydraulikzylinder (24,300,524) anschließbar sind.

**Patentansprüche für folgende Vertragsstaaten : BE, IT, ES**

1. Mähdrescher (10) mit einer über zwei Hydraulikzylinder (24 bzw. 524) an ein Schrägfördergehäuse (20, 520 bzw. 620) höhenverstellbar angeordneten und an ihrer Unterseite mit zahlreichen nebeneinander liegenden Bodenkontaktelementen (52) versehenen Erntebergungsvorrichtung (16), wobei die Bodenkontaktelemente (52) die Bodenoberfläche über die gesamte Breite der Erntebergungsvorrichtung (16) abtasten und mindestens eine Sensorschaltereinrichtung (72) bzw. 572) eines elektrohydraulischen Systems betätigen, über das die Hydraulikzylinder (24 bzw. 524) in einem die Erntebergungsvorrichtung (16) automatisch in vorgegebenen Grenzen anhebenden und absenkenden Sinne betätigbar sind, dadurch gekennzeichnet, daß die Erntebergungsvorrichtung (16) als Einheit über das elektrohydraulische System um eine in Fahrtrichtung des Mähdreschers (10) verlaufende Achse automatisch in Abhängigkeit von der Bodenbeschaffenheit verstellbar ist.

2. Mähdrescher nach Anspruch 1, dadurch gekennzeichnet, daß das Abtasten über die gesamte Breite der Erntebergungsvorrichtung auch zum Verstellen der Erntebergungsvorrichtung (16) um die in Fahrtrichtung verlaufende Achse ausgenützt wird.

3. Mähdrescher nach Anspruch 1, dadurch gekennzeichnet, daß die Bodenkontaktelemente (52) in eine rechte und in eine linke Gruppe aufgeteilt sind, wobei jede Gruppe mit einer Sensorschaltereinrichtung (72 bzw. 572) verbunden ist.

4. Mähdrescher nach Anspruch 1, dadurch gekennzeichnet, daß das Schrägfördergehäuse (20) mit einer quer verlaufenden Antriebswelle (326) ausgerüstet ist, die in einem am vorderen Ende des Schrägfördergehäuses (20) vorgesehenen, die Erntebergungsvorrichtung (16) seitenkippbar aufnehmenden Anschlußrahmen (268) gelagert ist und die Arbeitswerkzeuge der Erntebergungsvorrichtung antreibt.

5. Mähdrescher nach Anspruch 1, dadurch gekennzeichnet, daß das Schrägfördergehäuse (20) einen nach hinten ansteigenden Boden (214) aufweist, wobei zumindest der untere mittlere Teil (216, 218) des Bodens nach oben gewölbt ausgebildet ist.

6. Mähdrescher nach einem oder mehreren der vorherigen Ansprüche, dadurch gekennzeichnet, daß der Anschlußrahmen (268) in seinem unteren Bereich einen Gelenkbolzen (270) aufweist, über den der Anschlußrahmen (268) am Schrägfördergehäuse (20) um eine sich in Längsrichtung des Schrägfördergehäuses verlaufende Achse seitlich kippbar bzw. schwenkbar ist.

7. Mähdrescher nach Anspruch 6, dadurch gekennzeichnet, daß der Anschlußrahmen (268) zum Anschluß an das Schrägfördergehäuse (20) zumindest ein sich in Längsrichtung des Schrägfördergehäuses erstreckendes Gestänge (292) aufweist, das einenends mit dem Schrägfördergehäuse (20), andere-

14

nends mit dem Anschlußrahmen (268) verbunden ist und einen seitlichen Versatz des oberen Teils des Anschlußrahmens (268) gegenüber dem Schrägfördergehäuse (20) gestattet.

8. Mähdrescher nach Anspruch 1, dadurch gekennzeichnet, daß zwischen dem Schrägfördergehäuse (20) und dem Anschlußrahmen (268) zur Verstellung der Querneigung des die Erntebergungsvorrichtung (16) aufnehmenden Anschlußrahmens (268) gegenüber dem Schrägfördergehäuse ein Hydraulikzylinder (300) vorgesehen ist.

9. Mähdrescher nach einem oder mehreren der vorherigen Ansprüche dadurch gekennzeichnet, daß alle Hydraulikzylinder (24,300,524) mit der linken und rechten Sensorschaltereinrichtung (72,572) wirkungsmäßig verbunden sind und jede Sensorschaltereinrichtung mit einem Teil der Erntebergungsvorrichtung (16) wirkungsmäßig verbunden ist.

10. Mähdrescher nach Anspruch 3, dadurch gekennzeichnet, daß zumindest eine Gruppe Bodenkontaktelemente (52) bis etwa mittig zwischen die beiden äußeren Seiten der Erntebergungsvorrichtung (16) geführt ist.

11. Mähdrescher nach Anspruch 10, dadurch gekennzeichnet, daß zu den in der linken oder rechten Gruppe angeordneten Bodenkontaktelementen (52) ein Bodenkontaktelement gehört, das zum Mittelpunkt bzw. zur Mittellinie der Erntebergungsvorrichtung (116) näher liegt als die übrigen Bodenkontaktelemente.

12. Mähdrescher nach Anspruch 3, dadurch gekennzeichnet, daß die Bodenkontaktelemente (52) einer jeden Gruppe wirkungsmäßig miteinander verbunden sind und daß das zugehörige elektrohydraulische System derart ausgebildet ist, daß die Hydraulikzylinder (24,524) Teil der Erntebergungsvorrichtung (16) beim Auftreten zahlreicher Absenk-Schaltimpulse nur in Abhängikeit des jenigen Schaltimpulses absenken, der von dem Bodenkontaktelementen (52) ausgeht, das dem Boden am nächsten ist.

13. Mähdrescher nach Anspruch 12, dadurch gekennzeichnet, daß die linken und rechten Gruppen der Bodenkontaktelemente (52) mit je einer mit Bezug auf die Bewegungsrichtung des Mähdreschers (10) quer verlaufenden Welle (58) wirkungsmäßig verbunden sind, die jeweils über die Bodenkontaktelemente (52) drehbar und mit einer Sensorschaltereinrichtung (72) verbunden ist, über die zur Steuerung der Lage der Erntebergungsvorrichtung (16) ein Schaltimpuls an die Stellvorrichtung bzw. die Hydraulikzylinder (24,300,524) geleitet wird.

14. Mähdrescher nach einem oder mehreren der vorherigen Ansprüche, dadurch gekennzeichnet, daß die nach vorne gerichtete Stirn- bzw. Anschlußfläche des Schrägfördergehäuses (20,520,620) zum Anschluß der Erntebergungsvorrichtung (16) gegenüber dem Mähdreschergehäuse um eine aufrechtstehende Ebene seitlich verdrehbar bzw. kippbar ist.

15. Mähdrescher nach einem oder mehreren der vorherigen Ansprüche, dadurch gekennzeichnet, daß das Schrägfördergehäuse (20,520,620)um seine Längsachse torsionsartig verdrehbar ist, wobei das hintere Ende des Schrägfördergehäuses nicht drehbar am Mähdreschergehäuse angeordnet ist und an das vordere Ende des Schrägfördergehäuses (20,520,620) die Hydraulikzylinder (24,524) zum Anheben derart angeschlossen sind, daß bei dem Ausfahren eine Kolbenstange eines Hydraulikzylinders (24,524) vordere Anschlußfläche des Schrägfördergehäuses um eine Längsachse des Schrägfördergehäuses (20,520,620) gedreht wird und somit die entsprechende Bewegung der aufrecht verlaufenden Anschlußfläche zur automatischen Anpassung der Erntebergungsvorrichtung (16) an die Bodenoberfläche herbeiführt.

16. Mähdrescher nach Anspruch 15, dadurch gekennzeichnet, daß in den Hydraulikleitungen zu den Hydraulikzylindern (24,524) zum Anheben Druckbegrenzungsventile (534,536) angeordnet sind, die bei einem bestimmten Druck öffnen, so daß zwischen den beiden Hydraulikzylindern eine Druckmittelverbindung herstellbar ist, wobei den Hydraulikzylindern weitere Druckbegrenzungsventile bzw. Hubbegrenzungselemente zugeordnet sind, die verhindern, daß das Schrägfördergehäuse über einen bestimmten Winkelbereich hinaus verdreht wird.

17. Mähdrescher nach einem oder mehreren der vorherigen Ansprüche, dadurch gekennzeichnet, daß beiderseits von Gelenkbolzen (232) je ein Hydraulikzylinder (24) vorgesehen ist und daß eine jede Sensorschaltereinrichtung (72) mit den Hydraulikzylindern derart wirkungsmäßig verbunden ist, daß sie getrennt steuerbar sind.

18. Mähdrescher nach einem oder mehreren der vorherigen Ansprüche, dadurch gekennzeichnet, daß die Hydraulikzylinder (24) mit einer Betätigungsvorrichtung zur Höhensteuerung der Erntebergungsvorrichtung (16) und einer Betätigungsvorrichtung zur Verstellung der Querneigung ausgerüstet sind, wobei die Sensorschaltereinrichtungen (72) in Reihe mit der Betätigungsvorrichtung zur Höhensteuerung derart geschaltet sind, daß zuerst der Anhebe-bzw. der Absenkimpuls von beiden Seiten der Erntebergungsvorrichtung (16) entgegengenommen werden muß, bevor die Betätigungsvorrichtung zur Verstellung der Querneigung der Erntebergungsvorrichtung (16)aktiviert wird.

19. Mähdrescher nach Anspruch 18, dadurch gekennzeichnet, dar Sensorschaltereinrichtungen (72) derart in Reihe an die Betätigungsvorrichtung zur Verstellung der Querneigung der Erntebergungsvorrichtung (16) angeschlossen sind, daß nach Erhalt einer Kombination von ungleichen Schaltimpulsen von beiden Seiten der Erntebergungsvorrichtung die Betätigungsvorrichtung zur Querneigung der Erntebergungsvorrichtung aktiviert wird.

20. Mähdrescher nach Anspruch 19, dadurch gekennzeichnet, daß die Betätigungsvorrichtung zur Höhensteuerung der Erntebergungsvorrichtung (16) mit einem Akkumulator (403) zur federnden Abstützung der Erntebergungsvorrichtung (16) ausgerüstet ist.

21. Mähdrescher nach einem oder mehreren der vorherigen Ansprüche, dadurch gekennzeichnet, daß Sensorschaltkontakte (420, 422) parallel an die Betätigungsvorrichtung (604, 606) zur Querneigung der Erntebergungsvorrichtung (16) angeschlossen sind, wobei zwischen Sensorschaltkontakten und der Betätigungsvorrichtung ein elektrischer Logikschaltkreis (612) geschaltet ist, so daß die Betätigungsvorrichtung zur Einstellung der Querneigung nicht auf gleich starke Schaltimpulse, jedoch auf ungleich starke Schaltimpulse der Sensorschaltkontakte von beiden Seiten oder auf Schaltimpulse von der einen oder anderen Seite der Erntebergungsvorrichtung (16) anspricht.

22. Mähdrescher nach einem oder mehreren der vorherigen Ansprüche, dadurch gekennzeichnet daß eine jede Sensorschaltereinrichtung (72) jeweils zwei Satz Ausgangsschaltkontakte (82) aufweist, wobei ein jeder Satz für die Betätigungsvorrichtung zur Höhensteuerung und Einstellung der Querneigung vorgesehen ist und die Anschlüsse der Ausgangskontakte derart sind, daß die Betätigungsvorrichtung zur Höhensteuerung nur bei zwei gleich großen Schaltimpulsen von Ausgangsschaltkontakten aktiviert wird, während die Betätigungsvorrichtung zur Einstellung der Querneigung nur bei einem Schaltimpuls aktiviert wird.

23. Mähdrescher nach Anspruch 22, dadurch gekennzeichnet, daß die Sensorschaltereinrichtungen (72) für die Höhensteuerung und Querneigung zwei Schaltkontakte aufweisen, die durch nicht leitende Kontakte getrennt sind, wobei die nicht leitenden Kontakte unterschiedlich lang sein können.

24. Mähdrescher nach Anspruch 23, dadurch gekennzeichnet, daß die nicht leitenden Schaltkontakte der Einstellvorrichtung für die Querneigung einen kleineren Abstand untereinander aufweisen als der Abstand zwischen nicht leitenden Schaltkontakten für die Höhensteuerung.

25. Mähdrescher nach Anspruch 24, dadurch gekennzeichnet, daß zumindest einer der Sätze der Sensorschaltereinrichtungen (72) zahlreiche Schaltkontakte aufweist, die dem Stellbereich der Sensorschaltereinrichtung entsprechen, und daß die Kontakte wahlweise an die Betätigungseinrichtung der Hydraulikzylinder (24,300,524) anschließbar sind.

## Claims
### Claims for the following Contracting States : DE, FR, GB

1. Combine harvester (10) with a crop gathering apparatus (16) arranged to be vertically adjustable on an inclined conveyor housing (20, 520, or 620)through the medium of two hydraulic cylinders (24 or 524) and provided at its underside with numerous ground contact elements (52) disposed side by side, the ground contact elements (52) sensing the surface of the ground over the entire width of the crop

16

gathering apparatus (16) and actuating at least one sensor switch device (72 or 572) of an electrohydraulic system, through the medium of which the hydraulic cylinders (24 or 524) can be operated in a manner raising and lowering the crop gathering apparatus (16) automatically within predetermined limits. characterised in that the crop gathering apparatus (16) is adjustable automatically as a unit through the medium of the electrohydraulic system about an axis extending in the direction of travel of the combine harvester (10) in dependence upon the nature of the ground, and the sensing action over the entire width of the crop gathering apparatus (16) is also utilised for adjusting the crop·gathering apparatus (16) about the axis extending in the direction of travel.

2. Combine harvester according to Claim 1,characterised in that the ground contact elements (52) are divided into a right-hand and a left-hand group, each group being connected to a sensor switch device (72 or 572).

3. Combine harvester according to Claim 1, characterised in that the inclined conveyor housing (20) is equipped with a transversely extending driving shaft (326) which is mounted in a connecting frame (268) provided at the front end of the inclined conveyor housing (20) and receiving the crop gathering apparatus (16) so that it can be tilted sideways and drives the working tools of the crop gathering apparatus.

4. Combine harvester according to Claim 1, characterised in that the inclined conveyor housing (20) has a floor (214) rising to the rear, at least the lower, middle portion (216, 218) of the floor being upwardly arched in form.

5. Combine harvester according to one or more of the preceding Claims, characterised in that the connecting frame (268) has an articulation pin (270) in its bottom region through the medium of which the connecting frame (268) is tiltable or swivellable sideways on the inclined conveyor housing (20) about an axis extending in the longitudinal direction of the inclined conveyor housing.

6. Combine harvester according to Claim 5, characterised in that for connection to the inclined conveyor housing (20), the connecting frame (268) has at least one linkage (292) extending in the longitudinal direction of the inclined conveyor housing which is connected at one end to the inclined conveyor housing (20) and at the other end to the connecting frame (268) and permits a sideways shift of the upper part of the connecting frame (268) with respect to the inclined conveyor housing (20).

7. Combine harvester according to Claim 1, characterised in that a hydraulic cylinder (300) is provided between the inclined conveyor housing (20) and the connecting frame (268) for adjusting the transverse inclination of the connecting frame (268) accommodating the crop gathering apparatus (16) with respect to the inclined conveyor housing.

8. Combine harvester according to one or more of the preceding claims, characterised in that all the hydraulic cylinders (24, 300, 524) are operatively connected to the left-hand and right-hand sensor switch devices (72, 572) and each sensor switch device is operatively connected to a part of the crop gathering apparatus (16).

9. Combine harvester according to Claim 2, characterised in that at least one group of ground contact elements (52) is carried to about midway between the two outer sides of the crop gathering apparatus (16).

10. Combine harvester according to Claim 9, characterised in that to the ground contact elements (52) arranged in the left-hand or right-hand group there belongs a ground contact element which is located nearer to the centre or centre line of the crop gathering apparatus (16) than the remaining ground contact elements.

11. Combine harvester according to Claim 2, characterised in that the ground contact elements (52) of each group are operatively connected to one another and the associated electrohydraulic system is designed in such manner that the hydraulic cylinders (24, 524) lower a part of the crop gathering apparatus (16) on the occurrence of numerous lowering switching pulses only in dependence upon that switching pulse which issues from the ground contact element (52) which is closest to the ground.

17

12. Combine harvester according to Claim 11, characterised in that the left-hand and right-hand groups of ground contact elements (52) are operatively connected to a shaft each (58) extending transversely with respect to the direction of movement of the combine harvester (10) and which is rotatable at any given time through the medium of the ground contact elements (52) and connected to a sensor switch device (72) by which for controlling the position of the crop gathering apparatus (16) a switching pulse is issued to the power means or the hydraulic cylinders (24, 300, 524) respectively.

13. Combine harvester according to one or more of the preceding claims, characterised in that the forwardly directed end or connecting surface of the inclined conveyor housing (20, 520, 620), for connection of the crop gathering apparatus (16), can be twisted or tilted sideways with respect to the combine harvester housing about a vertical plane.

14. Combine harvester according to one or more of the preceding claims, characterised in that the inclined conveyor housing (20,520,620) can be twisted in a torsional manner about its longitudinal axis, the rear end of the inclined conveyor housing being arranged non-rotatably on the combine harvester housing,and the hydraulic cylinders for raising (24, 524) are connected in such manner to the front end of the inclined conveyor housing (20, 520, 620)

that on the extension of a piston rod of a hydraulic cylinder (24, 524) the front connecting surface of the inclined conveyor housing is turned about a longitudinal axis of the inclined conveyor housing (20, 520, 620) and consequently the corresponding movement of the vertically extending connecting surface produces the automatic adaptation of the crop gathering apparatus (16) to the surface of the ground.

15. Combine harvester according to Claim 14, characterised in that in the hydraulic lines to the hydraulic cylinders (24, 524) for raising pressure limiting valves (534, 536) are arranged which open at a specific pressure, so that a pressure medium connection can be established between the two hydraulic cylinders, additional pressure limiting valves or stroke limiting elements which prevent the inclined conveyor housing being twisted beyond a certain angular range being associated with the hydraulic cylinders.

16. Combine harvester according to one or more of the preceding claims, characterised in that a hydraulic cylinder (24) is provided on both sides of articulation pins (232) and each sensor switch device (72) is operatively connected to the hydraulic cylinders in such manner that they are separately controllable.

17. Combine harvester according to one or more of the preceding claims, characterised in that the hydraulic cylinders (24) are equipped with an actuating device for height control of the crop gathering apparatus (16) and an actuating device for adjusting the transverse inclination, the sensor switch devices (72) being connected in series with the actuating device for height control in such manner that the raising or lowering pulse must first be received from both sides of the crop gathering apparatus (16) before the actuating device for adjusting the transverse inclination of the crop gathering apparatus (16) is activated.

18. Combine harvester according to Claim 17, characterised in that the sensor switch devices (72) are connected in series to the actuating device for adjusting the transverse inclination of the crop gathering apparatus (16) in such manner that after reception of a combination of unequal switching pulses from both sides of the crop gathering apparatus the actuating device for the transverse inclination of the crop gathering apparatus is activated.

19. Combine harvester according to Claim 18, characterised in that the actuating device for height control of the crop gathering apparatus (16) is equipped with an accumulator (403) for resilient support of the crop gathering apparatus (16).

20. Combine harvester according to one or more of the preceding claims, characterised in that sensor switching contacts (420, 422) are connected in parallel to the actuating device (604, 606) for transverse inclination of the crop gathering apparatus (16), an electric logic switching circuit (612) being connected between sensor switching contacts and the actuating device, so that the actuating device for adjusting the transverse inclination responds not to switching pulses of equal strength, but to switching pulses of unequal strength of the sensor switching contacts from both sides or to switching pulses from one or the other side of the crop gathering apparatus (16).

21. Combine harvester according to one or more of the preceding claims, characterised in that each sensor switch device (72) has two sets of output switching contacts (82), each set being provided for the actuating device for height control and for adjusting the transverse inclination and the connections of the output contacts are such that the actuating device for height control is activated only in the case of two switching pulses of equal magnitude from output switching contacts, while the actuating device for adjusting the transverse inclination is activated only in the case of one switching pulse.

22. Combine harvester according to Claim 21, characterised in that the sensor switch devices (72) for the height control and transverse inclination have two switching contacts which are separated by non-conducting contacts, it being possible for the non-conducting contacts to be of different lengths.

23. Combine harvester according to Claim 22, characterised in that the non-conducting switching contacts of the adjusting device for the transverse inclination are at a smaller distance from one another than that between non-conducting switching contacts for the height control.

24. Combine harvester according to Claim 23, characterised in that at least one of the sets of the sensor switch devices (72) has numerous switching contacts corresponding to the range of adjustment of the sensor switch device and the contacts are selectively connectable to the actuating device of the hydraulic cylinders (24, 300, 524).

**Claims for the following Contracting States : BE, IT, ES**

1. Combine harvester (10) with a crop gathering apparatus (16) arranged to be vertically adjustable on an inclined conveyor housing (20, 520 or 620) through the medium of two hydraulic cylinders (24 or 524) and provided at its underside with numerous ground contact elements (52) disposed side by side, the ground contact elements (52) sensing the surface of the ground over the entire width of the crop gathering apparatus (16) and actuating at least one sensor switch device (72 or 572) of an electrohydraulic system, through the medium of which the hydraulic cylinders (24 or 524) can be operated in a manner raising and lowering the crop gathering apparatus (16) automatically within predetermined limits, characterised in that the crop gathering apparatus (16) is adjustable automatically as a unit through the medium of the electrohydraulic system about an axis extending in the direction of travel of the combine harvester (10) in dependence upon the nature of the ground.

2. Combine harvester according to Claim 1, characterised in that the sensing action over the entire width of the crop gathering apparatus is also utilised for adjusting the crop gathering apparatus (16) about the axis extending in the direction of travel.

3. Combine harvester according to Claim 1, characterised in that the ground contact elements (52) are divided into a right-hand and a left-hand group, each group being connected to a sensor switch device (72 or 572).

4. Combine harvester according to Claim 1, characterised in that the inclined conveyor housing (20) is equipped with a transversely extending driving shaft (326) which is mounted in a connecting frame (268) provided at the front end of the inclined conveyor housing (20) and receiving the crop gathering apparatus (16) so that it can be tilted sideways and drives the working tools of the crop gathering apparatus.

5. Combine harvester according to Claim 1, characterised in that the inclined conveyor housing (20) has a floor (214) rising to the rear, at least the lower, middle portion (216, 218) of the floor being upwardly arched in form.

6. Combine harvester according to one or more of the preceding claims, characterised in that the connecting frame (268) has an articulation pin (270) in its bottom region through the medium of which the connecting frame (268) is tiltable or swivellable sideways on the inclined conveyor housing (20) about an axis extending in the longitudinal direction of the inclined conveyor housing.

7. Combine harvester according to Claim 6, characterised in that for connection to the inclined conveyor housing (20), the connecting frame (268) has at least one linkage (292) extending in the longitudinal direction of the inclined conveyor housing which is connected at one end to the inclined conveyor housing (20) and at the other end to the connecting frame (268) and permits a sideways shift of the upper part of the connecting frame (268) with respect to the inclined conveyor housing (20).

8. Combine harvester according to Claim 1, characterised in that a hydraulic cylinder (300) is provided between the inclined conveyor housing (20) and the connecting frame (268) for adjusting the transverse inclination of the connecting frame (268) accommodating the crop gathering apparatus (16) with respect to the inclined conveyor housing.

9. Combine harvester according to one or more of the preceding claims, characterised in that all the hydraulic cylinders (24, 300, 524) are operatively connected to the left-hand and right-hand sensor switch devices (72, 572) and each sensor switch device is operatively connected to a part of the crop gathering apparatus (16).

10. Combine harvester according to Claim 3, characterised in that at least one group of ground contact elements (52) is carried to about midway between the two outer sides of the crop gathering apparatus (16).

11. Combine harvester according to Claim 10, characterised in that to the ground contact elements (52) arranged in the left-hand or right-hand group there belongs a ground contact element which is located nearer to the centre or centre line of the crop gathering apparatus (16) than the remaining ground contact elements.

12. Combine harvester according to Claim 3, characterised in that the ground contact elements (52) of each group are operatively connected to one another and the associated electrohydraulic system is designed in such manner that the hydraulic cylinders (24, 524) lower a part of the crop gathering apparatus (16) on the occurrence of numerous lowering switching pulses only in dependence upon that switching pulse which issues from the ground contact element (52) which is closest to the ground.

13. Combine harvester according to Claim 12, characterised in that the left-hand and right-hand groups of ground contact elements (52) are operatively connected to a shaft each (58) extending transversely with respect to the direction of movement of the combine harvester (10) and which is rotatable at any given time through the medium of the ground contact elements (52) and connected to a sensor switch device (72)by which for controlling the position of the crop gathering apparatus (16) a switching pulse is issued to the power means or the hydraulic cylinders (24, 300, 524) respectively.

14. Combine harvester according to one or more of the preceding claims, characterised in that the forwardly directed end or connecting surface of the inclined conveyor housing (20, 520, 620), for connection of the crop gathering apparatus (16), can be twisted or tilted sideways with respect to the combine harvester housing about a vertical plane.

15. Combine harvester according to one or more of the preceding claims, characterised in that the inclined conveyor housing (20, 520, 620) can be twisted in a torsional manner about its longitudinal axis, the rear end of the inclined conveyor housing being arranged non-rotatably on the combine harvester housing, and the hydraulic cylinders (24, 524)for raising are connected in such manner to the front end of the inclined conveyor housing (20, 520, 620) that on the extension of a piston rod of a hydraulic cylinder (24, 524) the front connecting surface of the inclined conveyor housing is turned about a longitudinal axis of the inclined conveyor housing (20, 520, 620) and consequently the corresponding movement of the vertically extending connecting surface produces the automatic adaptation of the crop gathering apparatus (16) to the surface of the ground.

16. Combine harvester according to Claim 15, characterised in that in the hydraulic lines to the hydraulic cylinders (24, 524) for raising pressure limiting valves (534, 536) are arranged which open at a specific pressure, so that a pressure medium connection can be established between the two hydraulic cylinders, additional pressure limiting valves or stroke limiting elements which prevent the inclined conveyor housing being twisted beyond a certain angular range being associated with the hydraulic cylinders.

17. Combine harvester according to one or more of the preceding claims, characterised in that a hydraulic cylinder (24) is provided on both sides of articulation pins (232) and each sensor switch device (72) is operatively connected to the hydraulic cylinders in such manner that they are separately controllable.

18. Combine harvester according to one or more of the preceding claims, characterised in that the hydraulic cylinders (24) are equipped with an actuating device for height control of the crop gathering apparatus (16) and an actuating device for adjusting the transverse inclination, the sensor switch devices (72) being connected in series with the actuating device for height control in such manner that the raising or lowering pulse must first be received from both sides of the crop gathering apparatus (16) before the actuating device for adjusting the transverse inclination of the crop gathering apparatus (16) is activated.

19. Combine harvester according to Claim 18, characterised in that the sensor switch devices (72) are connected in series to the actuating device for adjusting the transverse inclination of the crop gathering apparatus (16) in such manner that after reception of a combination of unequal switching pulses from both sides of the crop gathering apparatus the actuating device for the transverse inclination of the crop gathering apparatus is activated.

20. Combine harvester according to Claim 19, characterised in that the actuating device for height control of the crop gathering apparatus (16) is equipped with an accumulator (403) for resilient support of the crop gathering apparatus (16).

21. Combine harvester according to one or more of the preceding claims, characterised in that sensor switching contacts (420, 422) are connected in parallel to the actuating device (604, 606) for transverse inclination of the crop gathering apparatus (16), an electric logic switching circuit (612) being connected between sensor switching contacts and the actuating device, so that the actuating device for adjusting the transverse inclination responds not to switching pulses of equal strength, but to switching pulses of unequal strength of the sensor switching contacts from both sides or to switching pulses from one or the other side of the crop gathering apparatus (16).

22. Combine harvester according to one or more of the preceding claims, characterised in that each sensor switch device (72) has two sets of output switching contacts (82), each set being provided for the actuating device for height control and for adjusting the transverse inclination and the connections of the output contacts are such that the actuating device for height control is activated only in the case of two switching pulses of equal magnitude from output switching contacts, while the actuating device for adjusting the transverse inclination is activated only in the case of one switching pulse.

23. Combine harvester according to Claim 22, characterised in that the sensor switch devices (72) for the height control and transverse inclination have two switching contacts which are separated by non-conducting contacts, it being possible for the non-conducting contacts to be of different lengths.

24. Combine harvester according to Claim 23, characterised in that the non-conducting switching contacts of the adjusting device for the transverse inclination are at a smaller distance from one another than that between non-conducting switching contacts for the height control.

25. Combine harvester according to Claim 24, characterised in that at least one of the sets of the sensor switch devices (72) has numerous switching contacts corresponding to the range of adjustment of the sensor switch device and the contacts are selectively connectable to the actuating device of the hydraulic cylinders (24, 300, 524).

**Revendications**
**Revendications pour les Etats contractants suivants : DE, FR, GB**

1. Moissonneuse-batteuse (10) comprenant un appareil de récolte (16) disposé réglable en hauteur par deux vérins hydrauliques (24 ou 524) sur un carter de transport oblique (20, 520 ou 620) et dont le dessous est pourvu de nombreux éléments de contact avec le sol (52) placés les uns à côté des autres pour palper la surface du sol sur toute la largeur de l'appareil de récolte (16) et pour actionner au moins un organe commutateur de détection (72 ou 572) d'un système électro-hydraulique, par lequel les vérins hydrauliques (24 ou 524) sont manoeuvrables dans le sens d'un soulèvement et d'un abaissement automatiques de l'appareil de récolte (16) entre des limites préfixées, caractérisée en ce que l'appareil de récolte (16) est réglable automatiquement comme une unité par le système électrohydraulique, autour d'un axe orienté dans le sens de marche de la moissonneuse-batteuse (10), en fonction de la configuration du sol, et que le palpage sur toute la largeur de l'appareil de récolte (16) est utilisé également pour le réglage de l'appareil de récolte (16) autour de l'axe orienté dans le sens de marche.

2. Moissonneuse-batteuse selon la revendication 1, caractérisée en ce que les éléments de contact avec le sol (52) sont répartis en un groupe droit et un groupe gauche, chaque groupe étant relié à un organe commutateur de détection (72 ou 572).

3. Moissonneuse-batteuse selon la revendication 1, caractérisée en ce que le carter de transport oblique (20) est équipé d'un arbre moteur (326) orienté transversalement, qui est monté rotatif dans un cadre de raccordement (268) prévu à l'extrémité avant du carter de transport oblique (20) et recevant l'appareil de récolte (16) de manière que celui-ci puisse être basculé latéralement, l'arbre moteur entraînant des outils de travail de l'appareil de récolte.

4. Moissonneuse-batteuse selon la revendication 1, caractérisée en ce que le carter de transport oblique (20) présente un fond (214) qui s'élève vers l'arrière et dont au moins la partie médiane du dessous (216, 218) est bombée vers le haut.

5. Moissonneuse-batteuse selon une ou plusieurs des revendications précédentes, caractérisée en ce que le cadre de raccordement (268) présente dans sa partie inférieure un tourillon d'articulation (270) autour duquel le cadre de raccordement (268) est disposé sur le carter de transport oblique (20) de manière qu'il puisse basculer ou pivoter latéralement autour d'un axe s'étendant dans le sens de la longueur du carter de transport oblique.

6. Moissonneuse-batteuse selon la revendication 5, caractérisée en ce que, pour le raccordement au carter de transport oblique (20), le cadre de raccordement (268) présente au moins une barre (292) s'étendant dans le sens de la longueur du carter de transport oblique, barre qui est reliée par une extrémité à ce carter (20) et par son autre extrémité au cadre de raccordement (268) et qui autorise un décalage latéral de la partie supérieure du cadre de raccordement (268) par rapport au carter (20).

7. Moissonneuse-batteuse selon la revendication 1, caractérisée en ce qu'un vérin hydraulique (300) est prévu entre le carter de transport oblique (20) et le cadre de raccordement (268) pour le réglage de l'inclinaison transversale du cadre de raccordement (268), recevant l'appareil de récolte (16), par rapport au carter de transport oblique.

8. Moissonneuse-batteuse selon une ou plusieurs des revendications précédentes, caractérisée en ce que tous les vérins hydrauliques (24, 300, 524) sont reliés fonctionnellement aux organes commutateurs de détection (72, 672) du côté gauche et du côté droit et que chacun de ces organes commutateurs est relié fonctionnellement à une partie de l'appareil de récolte (16).

9. Moissonneuse-batteuse selon la revendication 2, caractérisée en ce qu'au moins un groupe d'éléments de contact avec le sol (52) s'étend à peu près jusqu'au milieu entre les deux côtés extérieurs de l'appareil de récolte (16).

10. Moissonneuse-batteuse selon la revendication 9, caractérisée en ce que les éléments de contact avec le sol (52) disposés dans le groupe gauche ou dans le groupe droit comprennent un élément de contact avec le sol situé plus près du centre ou de l'axe central de l'appareil de récolte (16) que les autres éléments de contact avec le sol.

11. Moissonneuse-batteuse selon la revendication 2, caractérisée en ce que les éléments de contact avec le sol (52) de chaque groupe sont reliés fonctionnellement entre eux et que le système électro-hydraulique associé est réalisé de manière que les vérins hydrauliques (24, 524) produisent, en cas

22

d'apparition de nombreuses impulsions d'abaissement, l'abaissement d'une partie de l'appareil de récolte (16) en fonction seulement de l'impulsion issue de l'élément de contact avec le sol (52) situé le plus près du sol.

12. Moissonneuse-batteuse selon la revendication 11, caractérisée en ce que les groupes gauche et droit des éléments de contact avec le sol (52) sont chacun reliés fonctionnellement à un axe (58) orienté transversalement au sens de déplacement de la moissonneusebatteuse (10), axe qui peut être tourné par les éléments de contact avec le sol (52) et est relié à un organe commutateur de détection (72) par lequel une impulsion est envoyée au dispositif de positionnement ou aux vérins hydrauliques (24, 300, 524) en vue de la commande de la position de l'appareil de récolte.

13. Moissonneuse-batteuse selon une ou plusieurs des revendications précédentes, caractérisée en ce que la face de tête dirigée vers l'avant ou face de raccordement du carter de transport oblique (20, 520, 620), servant au raccordement de l'appareil de récolte (16), est latéralement rotative ou basculante autour d'un plan vertical par rapport à la caisse de la moissonneusebatteuse.

14. Moissonneuse-batteuse selon une ou plusieurs des revendications précédentes, caractérisée en ce que le carter de transport oblique (20, 520, 620) est susceptible d'être tourné par torsion autour de son axe longitudinal, l'extrémité arrière du carter étant disposée non rotative sur la caisse de la moissonneuse-batteuse et les vérins hydrauliques (24, 524) pour le soulèvement étant raccordés de telle manière à l'extrémité avant du carter de transport oblique (20, 520, 620) que lors de l'extension d'une tige de piston d'un vérin hydraulique (24, 524), la face avant de raccordement du carter soit tournée autour d'un axe longitudinal de ce carter (20, 520, 620) et provoque ainsi le mouvement correspondant de la face de raccordement verticale en vue de l'adaptation automatique de l'appareil de récolte (16) à la surface du sol.

15. Moissonneuse-batteuse selon la revendication 14, caractérisée en ce que des soupapes limitatrices de pression (534, 536) sont installées dans les conduites hydrauliques menant aux vérins (24, 524) pour le soulèvement, soupapes qui s'ouvrent à une pression déterminée, de sorte qu'une liaison pour le fluide de pression puisse être établie entre les deux vérins hydrauliques, des soupapes limitatrices de pression supplémentaires ou des éléments de limitation de course étant coordonnés en outre aux vérins hydrauliques pour empêcher que le carter de transport oblique soit tourné au-delà d'une plage angulaire déterminée.

16. Moissonneuse-batteuse selon une ou plusieurs des revendications précédentes, caractérisée en ce qu'un vérin hydraulique (24) est prévu des deux côtés du tourillon d'articulation (232) et que chaque organe commutateur de détection (72) est relié fonctionnellement aux vérins hydrauliques de manière qu'ils puissent être commandés séparément.

17. Moissonneuse-batteuse selon une ou plusieurs des revendications précédentes, caractérisée en ce que les vérins hydrauliques (24) sont équipés d'un dispositif de manoeuvre pour la commande de la hauteur de l'appareil de récolte (16) et d'un dispositif de manoeuvre pour le réglage de l'inclinaison transversale, les organes commutateurs de détection (72) étant connectés en série avec le dispositif de manoeuvre pour la commande de la hauteur, de manière que l'impulsion de soulèvement ou l'impulsion d'abaissement des deux côtés de l'appareil de récolte (16) doive être prise en compte d'abord, avant que ne soit actionné le dispositif de manoeuvre pour le réglage de l'inclinaison transversale de l'appareil de récolte (16).

18. Moissonneuse-batteuse selon la revendication 17, caractérisée en ce que les organes commutateurs de détection (72) sont connectés en série avec le dispositif de manoeuvre pour le réglage de l'inclinaison transversale de l'appareil de récolte (16), de manière que le dispositif de manoeuvre pour l'inclinaison transversale de l'appareil de récolte soit actionné après réception d'une combinaison d'impulsions inégales des deux côtés de l'appareil de récolte.

19. Moissonneuse-batteuse selon la revendication 18, caractérisée en ce que le dispositif de manoeuvre pour la commande de la hauteur de l'appareil de récolte (16) est équipé d'un accumulateur (403) pour le soutien élastique de l'appareil de récolte (16).

**20.** Moissonneuse-batteuse selon une ou plusieurs des revendications précédentes, caractérisée en ce que les contacts de détection (420, 422) sont connectés en parallèle au dispositif de manoeuvre (604, 606) pour l'inclinaison transversale de l'appareil de récolte (16), avec prévision d'un circuit électrique logique (612) entre les contacts des organes de détection et le dispositif de manoeuvre, de manière que le dispositif de manoeuvre pour le réglage de l'inclinaison transversale ne réagisse pas à des impulsions de même puissance, mais réagisse à des impulsions de puissance inégale des contacts des organes de détection des deux côtés, ou à des impulsions provenant de l'un ou l'autre côté de l'appareil de récolte (16).

**21.** Moissonneuse-batteuse selon une ou plusieurs des revendications précédentes, caractérisée en ce que chaque organe commutateur de détection (72) présente deux jeux de contacts de sortie (82), un jeu étant prévu pour le dispositif de manoeuvre servant à la commande en hauteur et un jeu étant prévu pour le dispositif de commande servant au réglage de l'inclinaison transversale, les connexions des contacts de sortie étant réalisées de manière que le dispositif de manoeuvre pour la commande de la hauteur soit seulement actionné en cas d'application de deux impulsions de même grandeur de contacts de sortie, tandis que le dispositif de manoeuvre pour le réglage de l'inclinaison transversale est actionné seulement en cas d'application d'une impulsion.

**22.** Moissonneuse-batteuse selon la revendication 21, caractérisée en ce que les organes commutateurs de détection (72) pour la commande de la hauteur et de l'inclinaison transversale présentent deux contacts de commutation qui sont séparés par des contacts non conducteurs, lesquels peuvent avoir des longueurs différentes.

**23.** Moissonneuse-batteuse selon la revendication 22, caractérisée en ce que les contacts non conducteurs du dispositif de manoeuvre pour l'inclinaison transversale sont situés à une plus faible distance l'un de l'autre que la distance qui sépare les contacts non conducteurs pour la commande de la hauteur.

**24.** Moissonneuse-batteuse selon la revendication 23, caractérisée en ce qu'au moins un jeu de contacts des organes commutateurs de détection (72) comporte de nombreux contacts qui correspondent à la plage de réglage de l'organe commutateur de détection, et que les contacts peuvent être raccordés sélectivement au dispositif de manoeuvre des vérins hydrauliques (24, 300, 524).

**Revendications pour les Etats contractants suivants : BE, IT, ES**

**1.** Moissonneuse-batteuse (10) comprenant un appareil de récolte (16) disposé réglable en hauteur par deux vérins hydrauliques (24 ou 524) sur un carter de transport oblique (20, 520 ou 620) et dont le dessous est pourvu de nombreux éléments de contact avec le sol (52) placés les uns à côté des autres pour palper la surface du sol sur toute la largeur de l'appareil de récolte (16) et pour actionner au moins un organe commutateur de détection (72 ou 572) d'un système électro-hydraulique, par lequel les vérins hydrauliques (24 ou 524) sont manoeuvrables dans le sens d'un soulèvement et d'un abaissement automatiques de l'appareil de récolte (16) entre des limites préfixées, caractérisée en ce que l'appareil de récolte (16) est réglable automatiquement comme une unité par le système électrohydraulique, autour d'un axe orienté dans le sens de marche de la moissonneuse-batteuse (10), en fonction de la configuration du sol.

**2.** Moissonneuse-batteuse selon la revendication 1, caractérisée en ce que le palpage sur toute la largeur de l'appareil de récolte (16) est utilisé également pour le réglage de l'appareil de récolte (16) autour de l'axe orienté dans le sens de marche.

**3.** Moissonneuse-batteuse selon la revendication 1, caractérisée en ce que les éléments de contact avec le sol (52) sont répartis en un groupe droit et un groupe gauche, chaque groupe étant relié à un organe commutateur de détection (72 ou 572).

**4.** Moissonneuse-batteuse selon la revendication 1, caractérisée en ce que le carter de transport oblique (20) est équipé d'un arbre moteur (326) orienté transversalement, qui est monté rotatif dans un cadre de raccordement (268) prévu à l'extrémité avant du carter de transport oblique (20) et recevant l'appareil de récolte (16) de manière que celui-ci puisse être basculé latéralement, l'arbre moteur entraînant des outils de travail de l'appareil de récolte.

5. Moissonneuse-batteuse selon la revendication 1, caractérisée en ce que le carter de transport oblique (20) présente un fond (214) qui s'élève vers l'arrière et dont au moins la partie médiane du dessous (216, 218) est bombée vers le haut.

6. Moissonneuse-batteuse selon une ou plusieurs des revendications précédentes, caractérisée en ce que le cadre de raccordement (268) présente dans sa partie inférieure un tourillon d'articulation (270) autour duquel le cadre de raccordement (268) est disposé sur le carter de transport oblique (20) de manière qu'il puisse basculer ou pivoter latéralement autour d'un axe s'étendant dans le sens de la longueur du carter de transport oblique.

7. Moissonneuse-batteuse selon la revendication 6, caractérisée en ce que, pour le raccordement au carter de transport oblique (20), le cadre de raccordement (268) présente au moins une barre (292) s'étendant dans le sens de la longueur du carter de transport oblique, barre qui est reliée par une extrémité à ce carter (20) et par son autre extrémité au cadre de raccordement (268) et qui autorise un décalage latéral de la partie supérieure du cadre de raccordement (268) par rapport au carter (20).

8. Moissonneuse-batteuse selon la revendication 1, caractérisée en ce qu'un vérin hydraulique (300) est prévu entre le carter de transport oblique (20) et le cadre de raccordement (268) pour le réglage de l'inclinaison transversale du cadre de raccordement (268), recevant l'appareil de récolte (16), par rapport au carter de transport oblique.

9. Moissonneuse-batteuse selon une ou plusieurs des revendications précédentes, caractérisée en ce que tous les vérins hydrauliques (24, 300, 524) sont reliés fonctionnellement aux organes commutateurs de détection (72, 672) du côté gauche et du côté droit et que chacun de ces organes commutateurs est relié fonctionnellement à une partie de l'appareil de récolte (16).

10. Moissonneuse-batteuse selon la revendication 3, caractérisée en ce qu'au moins un groupe d'éléments de contact avec le sol (52) s'étend à peu près jusqu'au milieu entre les deux côtés extérieurs de l'appareil de récolte (16).

11. Moissonneuse-batteuse selon la revendication 10, caractérisée en ce que les éléments de contact avec le sol (52) disposés dans le groupe gauche ou dans le groupe droit comprennent un élément de contact avec le sol situé plus près du centre ou de l'axe central de l'appareil de récolte (16) que les autres éléments de contact avec le sol.

12. Moissonneuse-batteuse selon la revendication 3, caractérisée en ce que les éléments de contact avec le sol (52) de chaque groupe sont reliés fonctionnellement entre eux et que le système électro-hydraulique associé est réalisé de manière que les vérins hydrauliques (24, 524) produisent, en cas d'apparition de nombreuses impulsions d'abaissement, l'abaissement d'une partie de l'appareil de récolte (16) en fonction seulement de l'impulsion issue de l'élément de contact avec le sol (52) situé le plus près du sol.

13. Moissonneuse-batteuse selon la revendication 12, caractérisée en ce que les groupes gauche et droit des éléments de contact avec le sol (52) sont chacun reliés fonctionnellement à un axe (58) orienté transversalement au sens de déplacement de la moissonneusebatteuse (10), axe qui peut être tourné par les éléments de contact avec le sol (52) et est relié à un organe commutateur de détection (72) par lequel une impulsion est envoyée au dispositif de positionnement ou aux vérins hydrauliques (24, 300, 524) en vue de la commande de la position de l'appareil de récolte.

14. Moissonneuse-batteuse selon une ou plusieurs des revendications précédentes, caractérisée en ce que la face de tête dirigée vers l'avant ou face de raccordement du carter de transport oblique (20, 520, 620), servant au raccordement de l'appareil de récolte (16), est latéralement rotative ou basculante autour d'un plan vertical par rapport à la caisse de la moissonneusebatteuse.

15. Moissonneuse-batteuse selon une ou plusieurs des revendications précédentes, caractérisée en ce que le carter de transport oblique (20, 520, 620) est susceptible d'être tourné par torsion autour de son axe longitudinal, l'extrémité arrière du carter étant disposée non rotative sur la caisse de la moissonneuse-batteuse et les vérins hydrauliques (24, 524) pour le soulèvement étant raccordés de telle manière à l'extrémité avant du carter de transport oblique (20, 520, 620) que lors de l'extension d'une tige de piston d'un vérin hydraulique (24, 524), la face avant de raccordement du carter soit tournée autour d'un axe longitudinal de ce carter (20, 520, 620) et provoque ainsi le mouvement correspondant de la face de raccordement verticale en vue de l'adaptation automatique de l'appareil de récolte (16) à la surface du sol.

16. Moissonneuse-batteuse selon la revendication 15, caractérisée en ce que des soupapes limitatrices de pression (534, 536) sont installées dans les conduites hydrauliques menant aux vérins (24, 524) pour le soulèvement, soupapes qui s'ouvrent à une pression déterminée, de sorte qu'une liaison pour le fluide de pression puisse être établie entre les deux vérins hydrauliques, des soupapes limitatrices de pression supplémentaires ou des éléments de limitation de course étant coordonnés en outre aux vérins hydrauliques pour empêcher que le carter de transport oblique soit tourné au-delà d'une plage angulaire déterminée.

17. Moissonneuse-batteuse selon une ou plusieurs des revendications précédentes, caractérisée en ce qu'un vérin hydraulique (24) est prévu des deux côtés du tourillon d'articulation (232) et que chaque organe commutateur de détection (72) est relié fonctionnellement aux vérins hydrauliques de manière qu'ils puissent être commandés séparément.

18. Moissonneuse-batteuse selon une ou plusieurs des revendications précédentes, caractérisée en ce que les vérins hydrauliques (24) sont équipés d'un dispositif de manoeuvre pour la commande de la hauteur de l'appareil de récolte (16) et d'un dispositif de manoeuvre pour le réglage de l'inclinaison transversale, les organes commutateurs de détection (72) étant connectés en série avec le dispositif de manoeuvre pour la commande de la hauteur, de manière que l'impulsion de soulèvement ou l'impulsion d'abaissement des deux côtés de l'appareil de récolte (16) doive être prise en compte d'abord, avant que ne soit actionné le dispositif de manoeuvre pour le réglage de l'inclinaison transversale de l'appareil de récolte (16).

19. Moissonneuse-batteuse selon la revendication 18, caractérisée en ce que les organes commutateurs de détection (72) sont connectés en série avec le dispositif de manoeuvre pour le réglage de l'inclinaison transversale de l'appareil de récolte (16), de manière que le dispositif de manoeuvre pour l'inclinaison transversale de l'appareil de récolte soit actionné après réception d'une combinaison d'impulsions inégales des deux côtés de l'appareil de récolte.

20. Moissonneuse-batteuse selon la revendication 19, caractérisée en ce que le dispositif de manoeuvre pour la commande de la hauteur de l'appareil de récolte (16) est équipé d'un accumulateur (403) pour le soutien élastique de l'appareil de récolte (16).

21. Moissonneuse-batteuse selon une ou plusieurs des revendications précédentes, caractérisée en ce que les contacts de détection (420, 422) sont connectés en parallèle au dispositif de manoeuvre (604, 606) pour l'inclinaison transversale de l'appareil de récolte (16), avec prévision d'un circuit électrique logique (612) entre les contacts des organes de détection et le dispositif de manoeuvre, de manière que le dispositif de manoeuvre pour le réglage de l'inclinaison transversale ne réagisse pas à des impulsions de même puissance, mais réagisse à des impulsions de puissance inégale des contacts des organes de détection des deux côtés, ou à des impulsions provenant de l'un ou l'autre côté de l'appareil de récolte (16).

22. Moissonneuse-batteuse selon une ou plusieurs des revendications précédentes, caractérisée en ce que chaque organe commutateur de détection (72) présente deux jeux de contacts de sortie (82), un jeu étant prévu pour le dispositif de manoeuvre servant à la commande en hauteur et un jeu étant prévu pour le dispositif de commande servant au réglage de l'inclinaison transversale, les connexions des contacts de sortie étant réalisées de manière que le dispositif de manoeuvre pour la commande de la hauteur soit seulement actionné en cas d'application de deux impulsions de même grandeur de contacts de sortie, tandis que le dispositif de manoeuvre pour le réglage de l'inclinaison transversale est actionné seulement en cas d'application d'une impulsion.

23. Moissonneuse-batteuse selon la revendication 22, caractérisée en ce que les organes commutateurs de détection (72) pour la commande de la hauteur et de l'inclinaison transversale présentent deux contacts de commutation qui sont séparés par des contacts non conducteurs, lesquels peuvent avoir des longueurs différentes.

**24.** Moissonneuse-batteuse selon la revendication 23, caractérisée en ce que les contacts non conducteurs du dispositif de manoeuvre pour l'inclinaison transversale sont situés à une plus faible distance l'un de l'autre que la distance qui sépare les contacts non conducteurs pour la commande de la hauteur.

**25.** Moissonneuse-batteuse selon la revendication 24, caractérisée en ce qu'au moins un jeu de contacts des organes commutateurs de détection (72) comporte de nombreux contacts qui correspondent à la plage de réglage de l'organe commutateur de détection, et que les contacts peuvent être raccordés sélectivement au dispositif de manoeuvre des vérins hydrauliques (24, 300, 524).

EP 0 234 585 B1

Fig. 1

Fig. 2

28

Fig. 3

Fig. 4

Fig. 5

*Fig. 14*

*Fig. 15*

*Fig. 6*

Fig. 7

Fig. 8

Fig. 9

Fig. 10

Fig. 11

Fig. 12

34

Fig. 13

*Fig. 16*